# EUROPÄISCHE PATENTSCHRIFT

(11) **EP 2 215 903 B1**
(45) Veröffentlichungstag und Bekanntmachung des Hinweises auf die Patenterteilung: **21.09.2011**
(21) Anmeldenummer: 10152177.1
(22) Anmeldetag: 29.01.2010
(51) Int. Cl.: A01C 9/00

(54) **Vorrichtung zum Ausbringen von Pflanzgut**
Device for planting plant goods
Dispositif pour planter des plants

(30) Priorität: 04.02.2009 DE 102009000628; 23.12.2009 DE 102009055309
(43) Veröffentlichungstag der Anmeldung: 11.08.2010
(73) Patentinhaber: Heiss, Andreas, 85104 Pförring-Dötting (DE)
(72) Erfinder: Heiss, Andreas, 85104 Pförring-Dötting (DE)
(74) Vertreter: Schlief, Thomas P.

(56) Entgegenhaltungen:
- WO-A2-2008/024760
- DE-A1- 2 802 904
- GB-A- 978 381
- US-A- 3 123 155
- US-A- 3 187 822

## Beschreibung

Die vorliegende Erfindung betrifft eine Vorrichtung zum Ausbringen von Pflanzgut, insbesondere Kartoffeln, in einer Reihe hintereinander. Die Vorrichtung umfasst hierbei wenigstens zwei Spuren mit jeweils einer Entnahmeeinrichtung für das Pflanzgut aus einem Vorratsbehälter und einer Setzschar, um das Pflanzgut gleichzeitig in mehreren Reihen auszubringen. Hierbei ist ein gleichmäßiger Pflanzabstand der Spuren voreinstellbar. Weiterhin betrifft die Erfindung ein Verfahren zum Anbauen von Pflanzgut, insbesondere Kartoffeln, bei welchem das Pflanz- oder Saatgut mit einem gleichmäßigen Pflanzabstand in einer Reihe hintereinander abgelegt wird. Das Pflanzgut wird hierbei in einer Vielzahl nebeneinander angeordneter Reihen unter Bildung von Fahrgassen ausgebracht.

Auch wenn vorliegend vorwiegend Kartoffellegemaschinen beschrieben werden, ist es selbstverständlich ebenfalls möglich andere Pflanzen mittels entsprechender Vorrichtungen auszubringen. Das Pflanzgut wird mittels entsprechender Vorrichtungen, insbesondere Kartoffellegemaschinen, in mehreren Reihen nebeneinander gleichzeitig, häufig in Dämmen, gepflanzt. Da sich Dünge- und Beizvorrichtungen zunehmend über mehrere Arbeitsbreiten der Pflanzeinrichtung bzw. eine Vielzahl von Reihen erstrecken, kommen aufgrund des hierdurch bedingten Gewichts überwiegend Breitreifen an den die Dünge- und Beizvorrichtungen tragenden Schleppern zum Einsatz. Für Breitreifen ist jedoch der Abstand zwischen den einzelnen Reihen oder Dämmen nicht mehr breit genug, so dass bereits während des Pflanzvorganges Fahrgassen für spätere Düngevorgänge gebildet werden müssen. In diesen wird kein Pflanzgut ausgebracht, da die Pflanzen beim späteren Überfahren beschädigt würden. Daher sind im Stand der Technik Kartoffellegemaschinen mit einer sogenannten Fahrgassenschaltung bekannt, bei welcher zwei Legereihen abgeschaltet werden.

Bekannte Legemaschinen des Standes der Technik (beispielsweise vierreihige Legemaschine der GLT-Serie der Fa. Grimme) weisen einen Zentralantrieb für die Entnahmeeinrichtungen, z.B. Becherwerke, aller Spuren auf. Dieser beinhaltet eine zentrale Antriebswelle, von welcher jeweils Bechergurte der einzelnen Entnahmeeinrichtungen angetrieben werden. Zum Einstellen des Pflanzabstandes ist es im Stand der Technik bekannt, beispielsweise mittels Stufenscheiben am Zentralantrieb der Entnahmeeinrichtungen verschiedene Übersetzungsstufen und somit verschiedene Pflanzabstände einzustellen. Werden die Entnahmeeinrichtungen durch einen zentralen Hydraulikmotor angetrieben, so ist eine Einstellung des gewünschten Pflanzabstandes einfach und komfortabel auch über ein Bedienterminal vom Schlepper aus möglich. Zum Abschalten einzelner Reihen ist es hierbei möglich, den Bechergurt mittels der vorhandenen Spannvorrichtung zu entspannen und hierdurch von der Antriebswelle zu entkoppeln. Somit können gezielt einzelne Reihen abgeschaltet werden, wenn eine Fahrgasse gebildet werden soll. Da der Bechergurt jedoch lediglich entspannt wird, kann es hierbei zu einem Mitlaufen des Gurtes kommen.

Es hat sich jedoch gezeigt, dass es beim Pflanzen von Kartoffeln in einer Vielzahl nebeneinander angeordneter Reihen mit Fahrgassenbildung häufig zu Qualitätsproblemen insbesondere der Kartoffeln bzw. Pflanzen zwischen und neben den Fahrgassen kommt, da dort bedingt durch die Fahrgassen andere Wachstumsbedingungen für die Pflanzen vorliegen als in den übrigen Reihen. Aufgabe der vorliegenden Erfindung ist es daher, eine Vorrichtung zum Ausbringen von Pflanzgut zu schaffen, welche durch Fahrgassen bedingte Einflüsse auf die Pflanzen zumindest teilweise auszugleichen vermag. Weiterhin soll ein entsprechendes Verfahren zum Anbauen von Pflanzgut vorgeschlagen werden.

Die Aufgabe wird gelöst mit den Merkmalen der unabhängigen Ansprüche.

Eine Vorrichtung zum Ausbringen von Pflanzgut, insbesondere Kartoffeln, in einer Reihe hintereinander weist wenigstens zwei Spuren mit jeweils einer Entnahmeeinrichtung für das Pflanzgut aus einem Vorratsbehälter und einer Setzschar auf. Hierdurch kann das Pflanzgut gleichzeitig in mehreren Reihen ausgebracht werden. Ein gleichmäßiger Pflanzabstand der Spuren ist hierbei voreinstellbar. Erfindungsgemäß ist der Pflanzabstand wenigstens einer Spur unabhängig von dem der anderen Spur oder der anderen Spuren auf wenigstens einen von dem der anderen Spur(en) abweichenden Wert einstellbar. Ist der Pflanzabstand wenigstens einer Spur unabhängig von dem der anderen einstellbar, so ist es in einfacher Weise möglich, die zwischen den Fahrgassen gelegenen Reihen bzw. an die Fahrgassen angrenzende Reihen mit einem engeren Pflanzabstand zu belegen. Da insbesondere in den Reihen zwischen den Fahrgassen ein Überangebot an Wasser und Lichteinfall vorliegt, können hierdurch entstehende Qualitätsprobleme durch die engere Bepflanzung vermindert oder vermieden werden. Die Anzahl der Spuren der Maschine sowie die Arbeitsbreite der zu verwendenden Dünge- oder Beizvorrichtung bestimmen hierbei, an welcher Spur oder auch an welchen Spuren der Pflanzabstand abweichend von dem der anderen einstellbar ist. Ein Pflanz- bzw. Legemuster mit einem engeren Pflanzabstand in den zwischen den Fahrgassen angeordneten Reihen kann durch den an wenigstens einer Spur unabhängig einstellbaren Pflanzabstand somit an Maschinen mit beliebiger Reihenanzahl realisiert werden.

Eine besonders vorteilhafte Weiterbildung der Erfindung sieht vor, dass der Pflanzabstand jeder Spur einzeln unabhängig von dem der anderen Spuren einstellbar ist. Hierdurch ist es möglich, das beschriebene Legemuster für jede Anzahl von Spuren der Pflanzvorrichtung sowie für jede beliebige Arbeitsbreite einer Dünge- oder Beizvorrichtung zu realisieren, da je nach vorliegenden Verhältnissen der Pflanzabstand der gerade benötigten Spur enger gestellt werden kann. Die erfindungsgemäße Vorrichtung kann somit mit Dünge- oder Beizvorrichtungen beliebiger Arbeitsbreite verwendet werden. Zudem kann in allen an die Fahrgassen angrenzenden Reihen der Pflanzabstand beliebig und unterschiedlich zueinander eingestellt werden.

Nach einer ersten vorteilhaften Ausführung der Erfindung ist vorgesehen, dass ein Pflanzabstand aller Spuren zentral voreinstellbar ist und der Pflanzabstand wenigstens einer Spur unabhängig von dem voreingestellten Pflanzabstand auf wenigstens einem von diesem abweichenden Wert einstellbar ist. Eine derartige Ausführung ermöglicht es, das gewünschte Legemuster auch an Maschinen zu verwirklichen, bei welchen wie im Stand der Technik üblich ein Zentralantrieb für alle Entnahmeeinrichtungen bzw. Legeaggregate der Vorrichtung vorgesehen ist.

Eine besonders vorteilhafte Ausführungsform der Erfindung sieht hierbei vor, dass der Pflanzabstand wenigstens einer Spur unabhängig von dem voreingestellten Pflanzabstand auf genau zwei verschiedene von dem voreingestellten Pflanzabstand abweichende Werte einstellbar ist. Eine derartige Ausführung ermöglicht weitreichendere Variationen des Pflanzabstandes und somit weiter verbesserte Anpassungen an die Licht-, Luft-, Boden- und Nährstoffverhältnisse der einzelnen, insbesondere an die Fahrgassen angrenzenden Reihen.

Bei einem bekannten Verfahren zum Anbauen von Pflanzgut, insbesondere Kartoffeln, wird das Pflanzgut mit einem gleichmäßigen Pflanzabstand in einer Reihe hintereinander abgelegt, wobei das Pflanzgut in einer Vielzahl nebeneinander angeordneter Reihen unter Bildung von Fahrgassen ausgebracht wird. Erfindungsgemäß ist vorgesehen, in den Reihen zwischen den Fahrgassen und in den außen direkt neben den Fahrgassen liegenden Reihen das Pflanzgut mit einem etwas geringeren Pflanzabstand als in den anderen Reihen abzulegen. Hierdurch kann eine durch die Fahrgassen bedingte Überversorgung der Pflanzen mit Luft und Wasser zumindest teilweise ausgeglichen werden.

Besonders bevorzugt ist es hierbei, wenn das Pflanzgut in den außen direkt neben den Fahrgassen liegenden Reihen mit einem größeren Pflanzabstand als in den Reihen zwischen den Fahrgassen ausgebracht wird. Der Pflanzabstand wird somit in jeder neben den Fahrgassen gelegenen Reihe entsprechend der jeweils dort herrschenden Luft- und Bodenverhältnisse optimiert.

Sind an einer Vorrichtung zum Ausbringen von Pflanzgut wenigstens zwei verschiedene, von einem voreingestellten Pflanzabstand abweichende Werte des Pflanzabstandes einstellbar, so kann das erfindungsgemäße Verfahren in günstiger Weise mittels der erfindungsgemäßen Vorrichtung durchgeführt werden. Je nach Anzahl der Spuren der Maschine ist es hierbei vorteilhaft, wenn die zwei verschiedenen Pflanzabstände an einer einzigen Spur abweichend von dem voreingestellten Pflanzabstand einstellbar sind oder wenn wenigstens zwei verschiedenen Pflanzabstände an verschiedenen Spuren der Maschine einstellbar sind.

Besonders vorteilhaft ist es jedoch, wenn der Pflanzabstand jeder Spur einzeln auf wenigstens zwei verschiedene von dem voreingestellten Pflanzabstand abweichende Werte einstellbar ist, da dieses eine optimale Anpassung des Legeabstandes nicht nur in den Reihen zwischen den Fahrgassen, sondern auch in den außen direkt neben den Fahrgassen gelegenen Reihen für alle Maschinen verschiedenster Spurenzahlen und alle Arbeitsbreiten von Düngevorrichtungen ermöglicht.

Nach einer zweiten Ausführungsform der Erfindung ist es vorteilhaft, wenn der Pflanzabstand der wenigstens einen Spur stufenlos auf einen von dem der anderen Spuren abweichenden Wert einstellbar ist. Auch hier ist es wiederum besonders vorteilhaft, wenn der Pflanzabstand jeder Spur einzeln stufenlos einstellbar ist, da die Vorrichtung dann wiederum universell verwendbar ist. Eine derartige Ausführung der Erfindung ist mittels eines Einzelantriebes je Entnahmeeinrichtung bzw. je Spur in günstiger Weise realisierbar.

Ebenfalls vorteilhaft ist es, wenn die Entnahmeeinrichtung einer oder mehrerer Spuren der Vorrichtung abschaltbar ist. Vorteilhafterweise umfasst die Vorrichtung hierbei wenigstens einen Dammräumer oder wenigstens eine Markiereinrichtung für eine Fahrgasse, so dass zur Bildung von Fahrgassen sowohl die Pflanzung ausgesetzt werden kann als auch ein bereits aufgebauter Damm wieder eingeebnet werden kann. Erfolgt die Pflanzung nicht in Dämmen, so kann anstelle eines Dammräumers auch eine Markiereinrichtung für eine Fahrgasse angeordnet sein, so dass die Fahrgasse auch dann gut erkennbar ist, wenn das Pflanzgut noch nicht aufgegangen ist.

Eine besonders vorteilhafte Ausführungsform der Erfindung sieht vor, dass an jeder Spur einzeln wahlweise die Entnahmeeinrichtung abschaltbar oder der voreingestellte Pflanzabstand oder wenigstens ein von dem voreingestellten Pflanzabstand verschiedener Wert des Pflanzabstandes einstellbar ist. Hierdurch ist es möglich, Fahrgassen an beliebige Stelle zu bilden, wobei jeweils eine optimalen Anpassung des Legeabstandes entsprechend der vorbeschriebenen Bedingungen möglich ist.

Vorzugsweise umfasst die Vorrichtung eine Steuereinheit, mittels welcher die Entnahmeeinrichtung einzelner Reihen abschaltbar und/oder der Pflanzabstand einzelner Spuren einstellbar ist. Die entsprechenden Einstellungen zur Bildung von Fahrgassen und zur entsprechenden Bepflanzung können hierdurch bequem vom Schlepper aus vorgenommen werden. Vorzugsweise erfolgt die Einstellung hierbei entsprechend vorgebbarer Parameter.

Bei einem Verfahren zum Ausbringen von Pflanzgut ist es vorteilhaft, wenn während und/oder nach dem Ausbringen des Pflanzgutes ein Dünge- oder Beizmittel ausgebracht wird, wobei in den direkt neben den Fahrgassen liegenden Reihen weniger Dünge- oder Beizmittel als in den übrigen Reihen ausgebracht wird. Weiterhin kann es auch vorteilhaft sein, wenn in den direkt neben den Fahrgassen liegenden Reihen kein Düngemittel bzw. kein Beizmittel ausgebracht wird.

Eine erfindungsgemäße Vorrichtung zum Ausbringen von Pflanzgut umfasst hierzu vorzugsweise einen Düngestreuer und/oder eine Beizvorrichtung mit wenigstens einem Ablauf je Spur, wobei der wenigstens eine Ablauf wenigstens einer Spur absperrbar ist. Besonders vorteilhaft ist es, wenn die zugeführte Düngemittelmenge und/oder Beizemenge wenigstens einer Spur abweichend von der der anderen Spuren einstellbar ist. Insbesondere durch eine günstige Einstellung des Pflanzabstandes in den an die Fahrgassen angrenzenden Reihen in Verbindung mit der verminderten Düngemittel- bzw. Beizzufuhr können hierdurch die durch die Fahrgassen bedingten Einflüsse nahezu vollständig ausgeglichen werden, so dass ein gleichmäßiges Pflanzenwachstum und gleichmäßiger Ertrag über alle Reihen erzielt werden kann.

Besonders vorteilhaft ist es hierbei, wenn während des Pflanzvorganges sowohl die Einstellung des Pflanzabstandes wie auch die zugeführte Düngemittel- bzw. Beizmittelmenge innerhalb einer Reihe entsprechend vorgebbarer Parameter mittels einer Steuereinheit selbsttätig durchgeführt wird. Die in der Steuereinheit vorgebbaren Parameter umfassen hierbei wenigstens die Anzahl der Spuren der Vorrichtung sowie eine Arbeitsbreite einer Dünge- oder Beizvorrichtung.

Nach einer besonders vorteilhaften Ausführung der Erfindung umfasst die Steuereinheit weiterhin ein Zählwerk, mittels welchem ein vollständiger vorprogrammierter Pflanzvorgang über das gesamte Feld selbsttätig abfahrbar ist. Die Zu- und Abschaltung einzelner Reihen sowie die Einstellung des Pflanzabstandes erfolgen hierbei entsprechend der Anzahl der Spuren der Vorrichtung und einer Arbeitsbreite einer nachfolgenden Vorrichtung für Dünge- und/oder Beizvorgänge. Hierdurch kann das zu bepflanzende Feld zügig abgefahren werden, wobei die Steuereinheit setbständig die entsprechenden Spuren abschaltet, sobald während einer Fahrt Fahrgassen gebildet werden müssen bzw. selbständig den Pflanzabstand enger schaltet, sobald eine an eine Fahrgasse angrenzende Reihe erreicht wird. Der Fahrer selbst muss bei entsprechender Vorprogrammierung keinerlei Einstellungen mehr vornehmen.

Um eine individuelle Einstellung des Pflanzabstandes jeder Entnahmeeinrichtung bzw. jeder Spur zu realisieren, ist es besonders vorteilhaft, wenn die Vorrichtung je Entnahmeeinrichtung einen Einzelantrieb aufweist, welcher durch die Steuereinheit ansteuerbar ist. Ebenso kann hierdurch auch die Entnahmeeinrichtung abgeschaltet werden. Derartige Einzelantriebe können elektrisch, hydraulisch oder auch pneumatisch ausgeführt sein und bieten insbesondere den Vorteil, dass dann eine Vielzahl verschiedener Pflanzabstände einstellbar ist.

Wird ein elektrischer Einzelantrieb je Entnahmeeinrichtung verwendet, so ist in einfacher Weise eine individuelle und stufenlose Einstellung des Pflanzabstandes beispielsweise mittels Frequenzumrichter möglich.

Besonders vorteilhaft ist es hierbei, wenn die Entnahmeeinrichtungen in Breitenrichtung der Vorrichtung verstellbar, vorzugsweise einzeln verstellbar, an der Vorrichtung angeordnet sind. Neben dem Pflanzabstand innerhalb einer Reihe kann auch der Abstand der Reihen zueinander vorzugsweise stufenlos eingestellt werden. Sind die Entnahmeeinrichtung mit einem elektrischen Einzelantrieb angetrieben, lässt sich die Verstellung des Reihenabstandes B in einfacher Weise vornehmen, da die Entnahmeeinrichtungen mitsamt dem antreibenden Elektromotor in Breitenrichtung der Vorrichtung verstellt werden können. Das Verschieben der Entnahmeeinrichtungen ist auch ohne eine Einstellung des Legeabstandes der Pflanzen vorteilhaft und daher selbständig erfinderisch.

Weiterhin ist es vorteilhaft, wenn die Vorrichtung einen Generator beinhaltet, welcher durch eine Zapfwelle eines Schleppers antreibbar ist. Die Versorgungsspannung für die elektrischen Einzelantriebe kann hierdurch in günstiger Weise bereitgestellt werden.

Ist je Spur der Vorrichtung ein weiterer elektrischer Einzelantrieb zum Antrieb eines Schubbodens vorgesehen, kann die regelmäßige Zufuhr von Pflanzgut aus dem Vorratsbehälter zur Entnahmevorrichtung auch bei verschiebbaren Entnahmeeinrichtungen gewährleistet werden, da Schubboden samt Antrieb ebenfalls mitverschoben werden können.

Eine vorteilhafte Weiterbildung der Erfindung sieht vor, dass die Einzelantriebe, vorzugsweise die Einzelantriebe der Entnahmeeinrichtungen, über eine Rüttelfunktion verfügen, um Doppelbelegungen von Legebechern der Entnahmeeinrichtungen zu verhindern. Die Anordnung eines separaten Rüttelmotors oder mechanischen Rüttelantriebs ist hierdurch nicht erforderlich.

Ebenso ist es jedoch auch vorteilhaft, wenn die Entnahmeeinrichtung wenigstens einer Spur durch ein Wechselgetriebe mit einem Zentralantrieb der Entnahmeeinrichtungen verbunden ist. Das Wechselgetriebe weist hierzu wenigstens zwei Übersetzungsstufen auf, so dass die Entnahmeeinrichtung entweder mit dem zentral eingestellten Pflanzabstand oder mit einem von diesem abweichenden Abstand betreibbar ist. Ein Wechselgetriebe mit mehreren Übersetzungsstufen ist jedoch ebenfalls denkbar. Besonders vorteilhaft ist es hierbei, wenn das Wechselgetriebe kuppelbar mit dem Zentralantrieb verbunden ist, da hierdurch eine sichere Abschaltung der einzelnen Entnahmeeinrichtung gewährleistet ist.

Eine bevorzugte Weiterbildung der Erfindung sieht vor, dass die Entnahmeeinrichtung wenigstens einer Spur durch eine Hohlwelle angetrieben ist, welche auf einer Antriebswelle des Zentralantriebes gelagert ist und durch das Wechselgetriebe mit dieser verbunden ist. Vorzugsweise weist das Wechselgetriebe einen schwenkbaren Winkelhebel auf, an dessen Enden jeweils Zahnräder zum Kuppeln der Hohlwelle mit der Antriebswelle angeordnet sind. Durch Schwenken des Winkelhebels sind zwei Übersetzungsstufen bzw. ein Abschalten der Entnahmeeinrichtungen möglich.

Eine andere vorteilhafte Ausführung der Erfindung sieht vor, dass die Vorrichtung zum Ausbringen von Pflanzgut ein nachgeordnetes Dammformblech aufweist und an dem Dammformblech wenigstens ein Sech, vorzugsweise ein Scheibensech, angeordnet ist, welches bei Fahrt am Seitenhang das Dammformblech hangaufwärts steuert. Diese Ausführung ist auch bei einer herkömmlichen Vorrichtung zum Ausbringen von Pflanzgut mit Dammformblech vorteilhaft und besitzt daher selbständig erfinderische Bedeutung. Das Scheibensech erteilt dem Dammformblech während des Ausbringens des Pflanzgutes und der gleichzeitigen Dammformung eine hangaufwärts gerichtete Querkraft. Hierdurch wird eine bezogen auf den Damm leicht außermittige, hangabwärtige Ablage des Pflanzguts erreicht. Einem im Stand der Technik häufig auftretenden seitlichen Herauswachsen der Pflanze am Seitenhang kann hierdurch entgegengewirkt werden.

Beispielsweise kann das Sech eine Schrägstellung in Bezug auf die Fahrtrichtung der Vorrichtung aufweisen, um eine hangaufwärts gerichtete Kraftkomponente zu erzeugen. Andere Anordnungen des Sechs mit dem Dammformblech sind jedoch ebenfalls denkbar.

Vorzugsweise ist das Sech im Bereich eines Räumelements des Dammformblechs angeordnet. Das Sech kann beispielsweise mittels eines Halters im Inneren des V-förmigen Räumelementes platzgünstig und sicher angebracht werden.

Vorzugsweise ist jedem Räuemelement des Dammformbleches ein Sech zugeordnet. Hierdurch kann eine besonders gute seitliche Führung erzielt werden.

Weist das Sech wenigstens einen seitlich angeordneten Auswerfer auf, werden durch das rotierende Sech seitlich der Dammflanken bereits während des Dammaufbaus kleine Wasserreservoirs gebildet, welche eine günstige Versorgung des Pflanzguts mit Wasser sicherstellen.

Eine andere vorteilhafte Weiterbildung der Erfindung sieht vor, dass die Vorrichtung eine GPS-Steuereinheit aufweist, wobei die GPS-Steuereinheit einen Speicher beinhaltet, in welchem der Verlauf von Höhenlinien hinterlegbar ist. Hierdurch ist es möglich, die Vorrichtung zum Ausbringen von Pflanzgut entlang der geografischen Höhenlinien zu steuern und das Pflanzgut entlang der Höhenlinien quer zum Hang auszubringen. Hierdurch ist eine Bewirtschaftung auch in ungünstigen Höhenlagen gelegener Flächen möglich, da diese quer zum Hang erfolgt. Es können somit auch Flächen bearbeitet werden, welche ansonsten einen Pflugverbot unterliegen. Besonders vorteilhaft ist hierbei die Kombination mit das Dammformblech hangaufwärts steuernden Sechen, da durch leicht hangabwärts versetzte Ablage des Pflanzgutes optimale Wachstumsbedingungen geschaffen werden.

Werden nach dem Ausbringen des Pflanzgutes mittels eines Dammformbleches wenigstens zwei Dämme mit jeweils einer dazwischenliegenden Furche gleichzeitig aufgebaut, so ist vorteilhaft, wenn wenigstens ein Räumelement des Dammformbleches austauschbar und/oder höhenverstellbar an dem Dammformblech angeordnet ist. Üblicherweise beinhaltet ein Dammformblech wenigstens zwei äußere Räumelemente und wenigstens ein dazwischen angeordnetes mittleres Räumelement zur Erzeugung der Furchen und Formung oder Vorformung der Dammflanken. Ist das wenigstens eine mittlere Räumelement austauschbar und/oder höhenverstellbar an dem Dammformblech angeordnet, so kann zumindest eine mittlere Furche mit einer geringeren Tiefe erzeugt werden. Hierdurch wird eine Kombination des Anbaus im Beetverfahren mit einem Anbau in Dämmen erreicht, welche die spezifischen Vorteile beider Verfahren in günstiger Weise verbindet. Durch die Kombination der beiden Verfahren können insbesondere können Vorteile in Bezug auf die Überdeckung des Pflanzguts und die Wasser- und Nährstoffversorgung erzielt werden. Ebenso kann jedoch mit demselben Dammformblech ein Anbau im herkömmlichen Dammverfahren durchgeführt werden.

Vorteilhaft ist es hierbei, wenn das wenigstens eine mittlere Räumelement eine wesentlich geringere Arbeitshöhe aufweist als die äußeren. Es kann somit beispielsweise ein Damm für eine Doppelreihe erzeugt werden, bei welchem die mittlere Furche nur eine geringe Tiefe aufweist. Hierdurch wird eine bessere Wasserversorgung als im Dammverfahren erreicht, die spätere Ernte ist im Vergleich zum Beetverfahren jedoch erleichtert, da insgesamt weniger Erde bewegt werden muss.

Nach einer vorteilhaften Weiterbildung der Erfindung sind den Räumelementen zusätzliche Flankenformer zugeordnet, welche eine den Räumelementen entsprechende Arbeitshöhe aufweisen. Ein günstiger Dammaufbau wird hierdurch unterstützt und die Ausbildung verschiedener Dammformen ermöglicht.

Die Vorrichtung zum Enddammaufbau kann hierbei in jeder beliebigen Reihenanzahl ausgeführt sein. Ist die Vorrichtung dreireihig ausgeführt, weist diese beispielsweise zwei äußere feste und zwei dazwischen angeordnete mittlere austauschbare oder höhenverstellbare Räumelemente auf. Ebenso kann bei einer mehrreihigen Ausführung des Dammformbleches eine Anordnung in Doppelreihen vorgesehen sein, wobei jede Doppelreihe zwei äußere feste und jeweils ein mittleres höhenverstellbares Räumelement aufweist.

Weiterhin können bei einer mehrreihigen Ausführung des Dammformbleches auch sämtliche mittleren Räumelemente herausnehmbar sein, so dass mittels des Dammformbleches auch ein Beet für den Anbau im Beetverfahren aufgebaut werden kann.

Weitere Vorteile der Erfindung werden anhand der nachfolgend dargestellten Ausführungsbeispiele beschrieben. Es zeigen:
- **Figur 1**: eine Vorrichtung zum Ausbringen von Pflanzgut als Übersichts- darstellung in einer Seitenansicht,
- **Figur 2**: eine Übersichtsdarstellung der Entnahmeeinrichtungen der Vor- richtung zum Ausbringen von Pflanzgut in einer Vorderansicht,
- **Figur 3**: eine schematische Darstellung des erfindungsgemäßen Verfah- ren zum Anbauen von Pflanzgut,
- **Figur 4**: eine erfindungsgemäße Vorrichtung zum Ausbringen von Pflanzgut mit einem Einzelantrieb je Entnahmevorrichtung in einer schematischen Draufsicht,
- **Figur 5**: eine erfindungsgemäße Vorrichtung mit einem Zentralantrieb und einem Wechselgetriebe in einer schematischen Draufsicht und
- **Figur 6**: die Vorrichtung der Figur 5 in einer schematischen Seitenan- sicht,
- **Figur 7**: eine erfindungsgemäße Vorrichtung mit verstellbaren Entnah- meeinrichtungen und elektrischen Einzelantrieben,
- **Figur 8**: eine schematische Seitenansicht der Vorrichtung der Figur 7,
- **Figur 9-11**: verschiedene Ausführungen eines Dammformblechs mit aus- tauschbaren oder höhenverstellbaren mittleren Räumelemen- ten,
- **Figur 12**: ein Dammformblech mit zugeordneten Flankenformem,
- **Figur 13a**: eine schematische Darstellung eines Dammaufbaus in einem herkömmlichen Dammverfahren,
- **Figur 13b**: eine schematische Darstellung eines Dammaufbaus in einem mit einem Beetverfahren kombinierten Dammverfahren,
- **Figur 14**: eine schematische Darstellung einer Vorrichtung zum Ausbrin- gen von Pflanzgut mit einem auf ein Dammformblech wirken- den Sech und
- **Figur 15**: eine schematische Darstellung einer Vorrichtung zum Ausbrin- gen von Pflanzgut mit einer GPS-Steuereinheit.

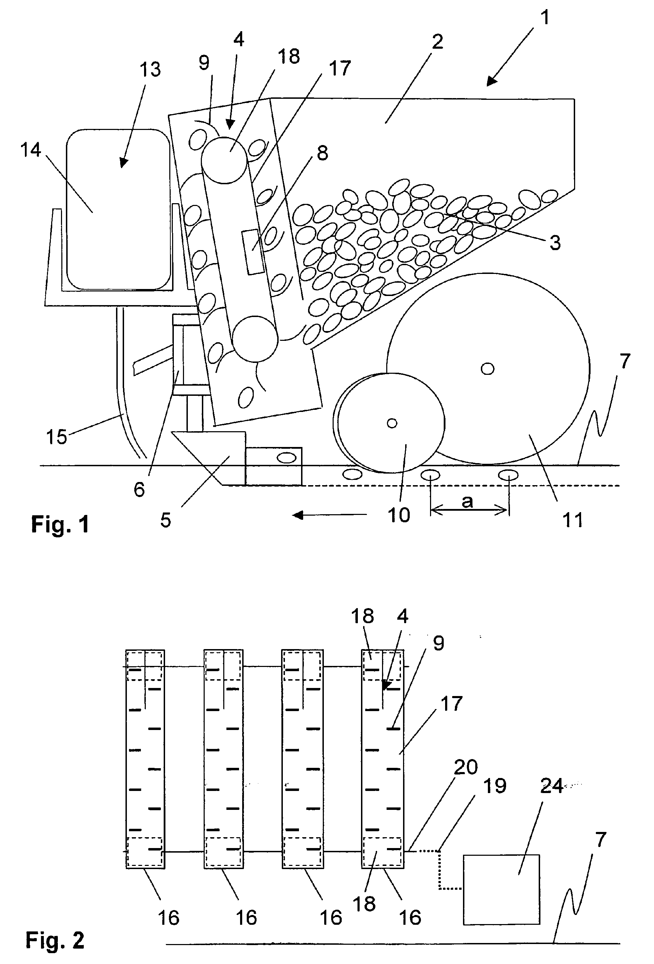

Figur 1 zeigt eine Vorrichtung 1 zum Ausbringen von Pflanzgut 3, welche vorliegend als Kartoffellegemaschine ausgeführt ist, in einer schematischen Seitenansicht. Die Vorrichtung 1 umfasst hierbei einen Vorratsbehälter 2 für das Pflanzgut 3, eine Entnahmeeinrichtung 4, welche vorliegend als Becherlegewerk ausgebildet ist, sowie eine Setzschar 5. Die Setzschar 5 kann hierbei in bekannter Weise höhenverstellbar über eine Parallelogrammführung 6 zum Ausgleich von Unebenheiten des Bodens 7 an der Vorrichtung 1 befestigt sein. Die Vorrichtung 1 kann weiterhin verschiedene zusätzliche Einrichtungen umfassen, beispielsweise eine Rüttelvorrichtung 8, welche Doppelbelegungen der Becher 9 verhindern soll, sowie Häufelscheiben 10 zum Bedecken des Pflanzgutes 3. Die Vorrichtung 1 kann weiterhin eine Dünge- und/oder Beizvorrichtung 13 umfassen. Die Beiz- oder Düngevorrichtung 13 umfasst in ebenfalls bekannter Weise zumindest einen Vorratsbehälter 14 für Düngemittel oder Beize sowie wenigstens einen Ablauf 15 je Spur der Vorrichtung 1. Um eine gleichmäßige Verteilung des Düngemittels bzw. der Beize zu erzielen, können hierbei jedoch auch mehrere Abläufe 15 je Spur 16 angeordnet sein. Die Vorrichtung 1 kann eine Vielzahl weiterer Werkzeuge umfassen oder auch mit einer Maschine zur Bodenbearbeitung oder zum Dammaufbau kombiniert sein. Die Vorrichtung 1 kann als gezogene Maschine, welche sich über Laufräder 11 auf dem Boden 7 abstützt, oder als Aushebemaschine zum Anschluss an einen Schlepper ausgeführt sein.

Derartige Vorrichtungen 1 sind in verschiedenen Ausgestaltungen und mit verschiedenen Spurbreiten erhältlich. Üblich sind zwei-, vier-, sechs- oder achtspurige Vorrichtungen 1, wobei die Erfindung anhand einer Vorrichtung 1 mit vier Spuren 16 beschrieben wird, wie beispielsweise aus Figur 2 ersichtlich. Andere Anzahlen von Spuren sind selbstverständlich ebenso möglich.

Figur 2 zeigt in einer schematischen Vorderansicht die Anordnung der vier Entnahmeeinrichtungen 4 einer vierspurigen Vorrichtung 1 zum Ausbringen von Pflanzgut 3. Die Entnahmeeinrichtungen 4 sind vorliegend als Becherlegewerke ausgebildet, bei welchen in an sich bekannter Weise ein Bechergurt 17, welcher in regelmäßigen Abständen mit Bechern 9 besetzt ist und über zwei Gurttrommeln endlos umläuft, wobei eine der Gurttrommeln 18 angetrieben ist. Der Pflanzabstand a des Pflanzgutes 3 bestimmt sich hierbei aus dem Abstand der Becher 9 auf dem Bechergurt 17 zueinander sowie aus der Drehzahl der Gurttrommeln. In der gezeigten Darstellung sind die unteren Gurttrommeln 18 von einer zentralen Antriebswelle 20 angetrieben, welche mit einem Zentralantrieb 24 verbunden in einer Wirkverbindung 19 steht.

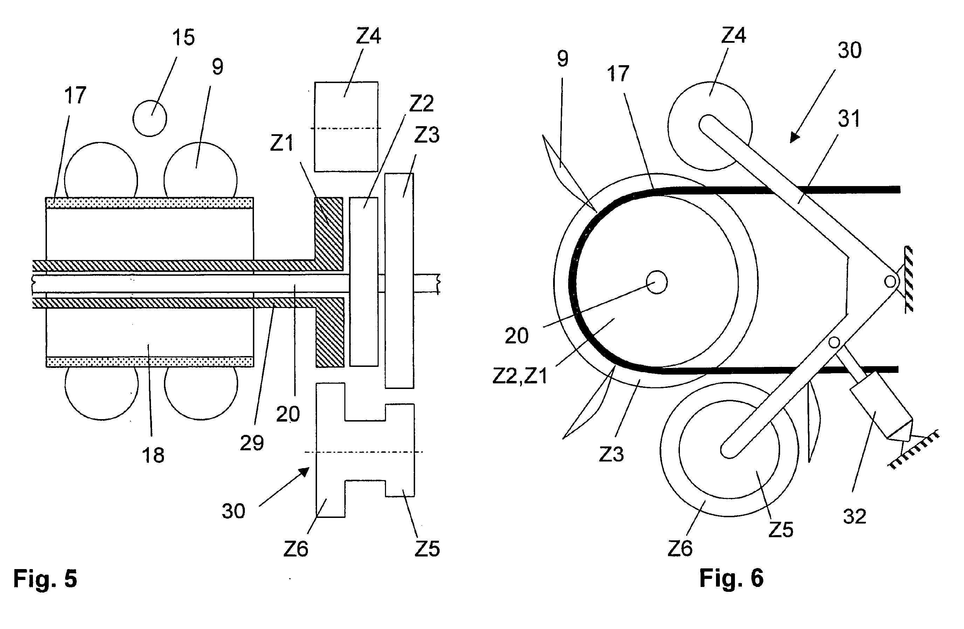

Die Wirkverbindung 19 kann in an sich bekannter Weise ein Getriebe mit Wechselrädem umfassen, welches die Antriebswelle 20 mit dem Laufrad 11 bzw. einem entsprechenden Bodenrad als Zentralantrieb 24 verbindet und somit eine feste, aber mittels der Wechselräder einstellbare Übersetzung zur zentralen Voreinstellung des Pflanzabstandes a für alle Spuren 16 ermöglicht. Durch die Wirkverbindung 19 mit dem Laufrad 11 oder Bodenrad ist ein konstanter, voreingestellter Pflanzabstand a auch bei verschiedenen Fahrgeschwindigkeiten möglich. Ebenso ist es bekannt, die Gurttrommeln 18 durch eine gemeinsame Antriebswelle 20 beispielsweise mittels eines Hydraulikmotors anzutreiben, welche durch eine entsprechende, hier nicht dargestellte, Steuervorrichtung ansteuerbar ist. Die Steuervorrichtung erhält hierbei eine Ist-Drehzahl von dem Laufrad bzw. Bodenrad 11 und setzt diese entsprechend in eine Soll-Drehzahl des Hydraulikmotors um, wodurch die Wirkverbindung 19 hergestellt wird. Die erfindungsgemäße Einstellung des Pflanzabstandes a' wenigstens einer Spur unabhängig von dem oben beschriebenen voreingestellten Pflanzabstand a wird anhand der Figuren 5 und 6 beschrieben.

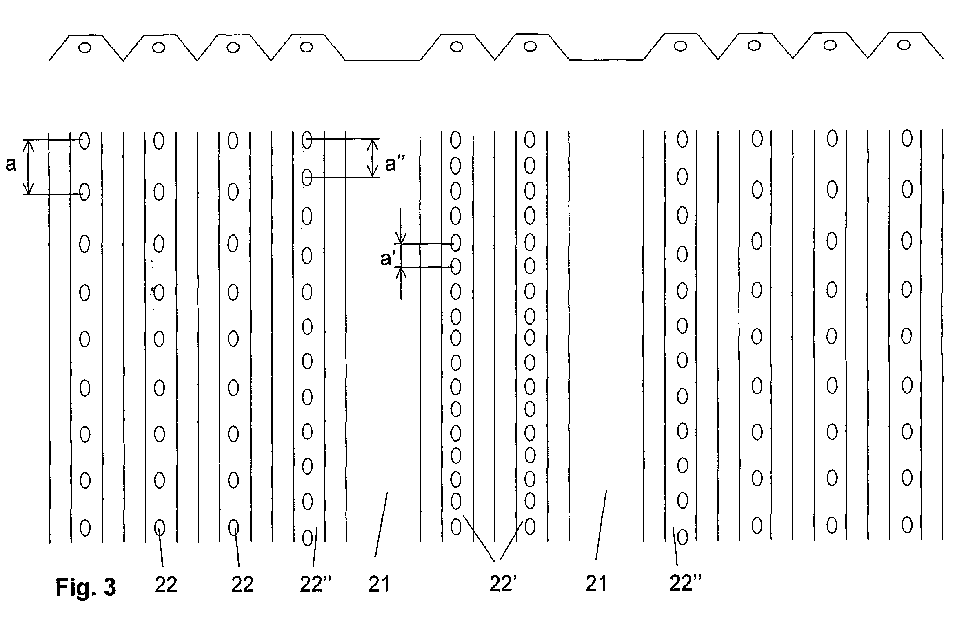

Figur 3 zeigt eine schematische Darstellung eines erfindungsgemäßen Verfahrens zum Ausbringen von Pflanzgut unter Bildung von Fahrgassen 21. Vorrichtungen zum Ausbringen von Düngemittel oder Beize umfassen in der Regel eine Mehrzahl von Arbeitsbreiten der Kartoffellegemaschine bzw. der Vorrichtung 1, so dass Fahrgassen 21 je nach Anzahl der Spuren 16 der Vorrichtung 1 sowie nach der Arbeitsbreite der Dünge- oder Beizvorrichtung jeweils nach einer bestimmten Anzahl von Reihen gebildet werden müssen. Vorliegend wird das erfindungsgemäße Verfahren anhand einer vierspurigen Vorrichtung zum Ausbringen von Pflanzgut 3 erläutert, wobei die spätere Dünge- oder Beizvorrichtung drei Arbeitsbreiten der Vorrichtung 1 umfasst.

In diesem Fall kann das Feld zunächst in einer ersten Richtung abgefahren werden, wobei das Pflanzgut 3 in vier Reihen nebeneinander mit einem voreingestellten Pflanzabstand a ausgebracht wird. Nach dem Wenden wird das Feld in entgegengesetzter Richtung abgefahren, wobei die erste und vierte Spur der Vorrichtung 1 abgeschaltet werden, um in bekannter Weise die Fahrgassen 21 zu bilden. In den Reihen 22' zwischen den Fahrgassen 21 wird währenddessen das Pflanzgut 3 ausgebracht, wobei in diesen Reihen 22' erfindungsgemäß das Pflanzgut 3 mit einem geringeren Pflanzabstand a' abgelegt wird. Im Anschluss daran wird das Feld wieder in der ersten Richtung abgefahren, wobei wiederum das Pflanzgut 3 in allen vier Spuren mit dem voreingestellten Pflanzabstand a ausgebracht wird.

Da die Kartoffeln bzw. das Pflanzgut 3 in den Reihen 22' zwischen den Fahrgassen 21 aufgrund einer Überversorgung mit Wasser und Luft häufig zu schnell oder schief wachsen, können durch die dichtere Belegung mit Pflanzgut 3 auch in diesen Reihen ähnliche Pflanzbedingungen wie in den regelmäßigen Reihen 22 geschaffen werden. Es hat sich gezeigt, dass nicht nur die Reihen 22' zwischen den Fahrgassen 21, sondern auch die Reihen 22" außen direkt neben den Fahrgassen 21 von einer Überversorgung mit Luft und Wasser betroffen sind. Das erfindungsgemäße Verfahren sieht daher vor, das Pflanzgut 3 auch in den Reihen 22" mit einem geringeren Pflanzabstand a' auszubringen. Die Anpassung an die Versorgung mit Luft, Wasser sowie gegebenenfalls Düngemitteln kann hierdurch in allen Reihen 22 entsprechend der Erfordernisse eingestellt werden und hierdurch weitgehend gleichmäßige Qualitätsergebnisse erzielt werden.

Bevorzugt wird hierbei das Pflanzgut 3 in den Reihen 22" mit einem Pflanzabstand a" ausgebracht, welcher kleiner ist als der voreingestellte Pflanzabstand a der Reihen 22, und welcher etwas größer ist als der Pflanzabstand a in den Reihen 22'. Hierdurch kann der Tatsache Rechnung getragen werden, dass die Reihen 22" nur zum Teil von den Einflüssen durch die Fahrgassen 21 betroffen sind, da diese an die regelmäßig ausgebildeten Reihen 22 angrenzen, während die Reihen 22' jeweils an eine einzige weitere Reihe 22' antreffen, welche ebenfalls von einer Überversorgung betroffen ist.

Umfasst die spätere Dünge- oder Beizvorrichtung hingegen vier Arbeitsbreiten der Vorrichtung 1, so muss zur Bildung der Fahrgassen 21 bei der zweiten Fahrt der Vorrichtung 1 die erste Fahrgasse und bei der dritten, in entgegengesetzter Richtung, stattfindenden Fahrt die dritte Spur abgeschaltet werden, während sich bei fünf Arbeitsbreiten wiederum die in Figur 2 gezeigte Fahrgassenanordnung bildet. Entsprechend, ergibt sich je nach Anzahl der Spuren 16 der Vorrichtung 1 sowie nach Arbeitsbreite der Dünge- oder Beizvorrichtung 13 eine andere Fahrgassenschaltung.

Sofern vor oder während des Ausbringens von Pflanzgut 3 ein Enddamm aufgebaut wurde, ist es erforderlich, zur Bildung der Fahrgassen 21 diesen wieder einzuebnen, um das spätere Befahren der Fahrgassen 21 mittels der Dünge- oder Beizvorrichtung 13 zu ermöglichen. Eine erfindungsgemäße Vorrichtung 1 weist daher je nach Anzahl der abschaltbaren Entnahmeeinrichtungen 4 wenigstens einen Dammräumer (nicht dargestellt) auf. Wird das Pflanzgut 3 hingegen nicht in Dämmen angebaut, so ist es ausreichend, anstelle eines Dammräumers zumindest an den abschaltbaren Entnahmevorrichtungen 4 eine Markiereinrichtung für eine Fahrgasse vorzusehen.

In Weiterentwicklung der Erfindung ist hierbei vorgesehen, dass der Pflanzabstand a der Spur 16 der Vorrichtung 1 einzeln und unabhängig von dem der anderen Spuren 16 einstellbar ist, so dass der Pflanzabstand a in jeder Reihe 22 individuell an die vorliegenden Erfordernisse angepasst werden kann. Hierdurch ist es möglich, das beschriebene Legemuster mit einer Anpassung der Pflanzabstände für jede Anzahl von Spuren 16 der Vorrichtung 1 sowie jede beliebige Arbeitsbreite von Dünge- oder Beizvorrichtungen 13 zu realisieren. Sofern den einzelnen Entnahmeeinrichtungen 4 hierbei jeweils einzelne Vorratsbehälter 2 für das Pflanzgut 3 zugeordnet sind, ist es so auch möglich, jede Spur 16 mit einer anderen Pflanzgutsorte zu belegen oder beispielsweise zu Testzwecken in jeder Reihe einen anderen Legeabstand a zu realisieren.

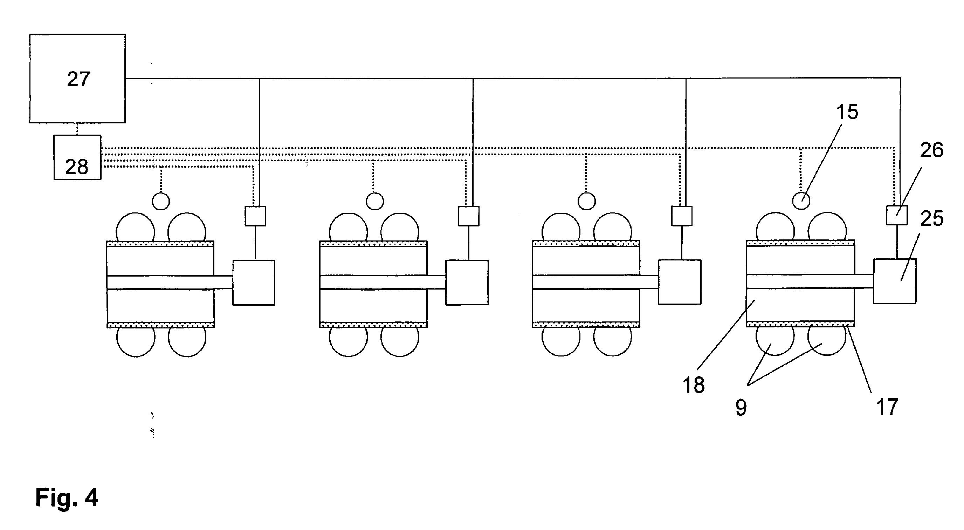

Nach einer vorteilhaften Weiterbildung des erfindungsgemäßen Verfahrens wird während und/oder nach dem Ausbringen des Pflanzgutes 3 ein Düngemittel oder eine Beize ausgebracht, wobei in den direkt neben den Fahrgassen 21 liegenden Reihen 22' und 22" weniger oder gar kein Düngemittel bzw. Beizmittel ausgebracht wird. Vorteilhafterweise wird jedoch auch hier die Düngemittel- bzw. Beizmittelzufuhr zumindest in den Reihen 22' und 22" individuell an die Gegebenheiten angepasst, wobei in den Reihen 22' nur sehr wenig Düngemittel aufgebracht wird und in den Reihen 22" etwas mehr als in den Reihen 22', jedoch weniger als in den regulär ausgebildeten Reihen 22. Bei einer erfindungsgemäßen Vorrichtung 1 zum Ausbringen von Pflanzgut 3 wie in den Figuren 4 bis 6 dargestellt, welche einen Dünge- oder Beizvorrichtung13 umfasst, kann hierbei der oder die Abläufe 15 jeder Spur 16 abgesperrt werden. Sind mehrere Abläufe 15 je Spur 16 angeordnet, so kann die Düngemittelmenge bzw. Beizemenge in einfacher Weise reguliert werden, indem nur ein Teil der Abläufe 15 je Spur 16 gesperrt wird.

Figur 4 zeigt eine erfindungsgemäße Vorrichtung 1 zum Ausbringen von Pflanzgut 3 in einer schematischen Draufsicht. Gezeigt ist lediglich eine Draufsicht auf die Entnahmevorrichtungen 4 sowie eine Prinzipdarstellung entsprechender Steuermittel. Die Entnahmevorrichtungen 4 beinhalten, wie bereits unter Figur 1 und 2 beschrieben, den Bechergurt 17 mit den an ihm angeordneten Bechern 9, welcher über die Gurttrommeln 18 geführt ist. Die erfindungsgemäße Vorrichtung 1 umfasst nach dieser Ausführungsform je Entnahmeeinrichtung 4 einen Einzelantrieb 25, welcher beispielsweise als Elektromotor oder als Hydraulikmotor ausgebildet sein kann. Der Einzelantrieb 25 ist jeweils über ein Stellglied 26, beispielsweise einem Frequenzumrichter oder ein ansteuerbares Ventil, mit einer zentralen Versorgungseinrichtung 27 verbunden, welche hier nur schematisch dargestellt ist. Die zentrale Versorgungseinrichtung 27 kann beispielsweise eine Hydraulikpumpe oder ein Stromaggregat sein, welches durch einen hier nicht dargestellten Schlepper zur Verfügung gestellt wird.

Selbstverständlich ist es auch möglich, anstelle eines hydraulischen oder elektrischen Antriebes einen pneumatischen Antrieb zu verwenden. Die Stellglieder 26 werden wiederum durch eine Steuereinheit 28 angesteuert, so dass die Einstellung der Drehzahl der angetriebenen Gurttrommel 18 und somit die Einstellung des Pflanzabstandes a, a', a" für jede Spur 16 der Vorrichtung 1 einzeln und unabhängig von dem Pflanzabstand a der anderen Spuren einstellbar ist. Insbesondere kann mittels eines Einzelantriebes 25 auch eine stufenlose Einstellung des Pflanzabstandes a je Spur 16 realisiert werden, so dass in günstiger Weise weitreichende Anpassungen des Pflanzabstandes a, a', a" möglich sind.

Wie weiterhin in Figur 4 ersichtlich, sind auch die Abläufe 15 einer Dünge- oder Beizvorrichtung 13 durch die Steuereinheit 28 ansteuerbar, um die Düngemittelzufuhr bzw. Beizezufuhr entsprechend der Erfordernisse in den einzelnen Reihen 22 zu regulieren. So kann beispielsweise mittels der Steuereinheit 28 ein Schieber (nicht dargestellt) in den einzelnen Abläufen 15 angesteuert werden, welcher den Ablauf 15 nur teilweise freigibt oder verschließt.

Vorzugsweise wird hierbei mittels der Steuereinheit 28 sowohl der Pflanzabstand a wie auch die Düngemittel- bzw. Beizezufuhr entsprechend vorgebbarer Parameter beispielsweise aufgrund von Erfahrungswerten, welche in der Steuereinheit 28 hinterlegt sind, eingestellt. So kann die Anzahl der Spuren 16 der Vorrichtung 1 ein fest vorgegebener Parameter sein, während die Arbeitsbreite der Dünge- oder Beizvorrichtung ein frei vorgebbarer Parameter ist. Die Steuereinheit 28 kann hieraus selbständig errechnen, nach wie vielen Reihen 22 jeweils eine Fahrgasse 21 zu bilden ist und/oder welche der Reihen 22 mit einem engeren Pflanzabstand a', a" belegt werden sollen. Die Steuereinheit 28 kann hierbei anzeigen, welche Spuren 16 jeweils abzuschalten sind und für welche Spuren 16 veränderte Pflanzabstände a', a" einzugeben sind oder nach einer vorteilhaften Ausführung der Erfindung diese Einstellungen jeweils selbsttätig vornehmen. Hierzu kann die Steuereinrichtung 28 einen Speicher umfassen, in welchem je nach Parameter geeignete Werte für die Einstellung der Pflanzabstände a', a" hinterlegt sind. Ebenso können die eingebbaren Parameter beispielsweise auch eine Pflanzgutsorte umfassen.

Vorzugsweise beinhaltet die Steuereinheit 28 ein Zählwerk, da dann die Einstellungen für Abschaltung einzelner Entnahmeeinrichtungen 4 oder Verminderung des Pflanzabstandes a oder auch der Düngemittel- oder Beizezufuhr nicht manuell durch einen Bediener vorgenommen werden müssen, sobald die entsprechenden Reihen 22" oder 22' erreicht werden, sondern die entsprechenden Einstellungen können selbsttätig durch die Steuereinheit 28 vorgenommen werden. Durch die Eingabe der vorgebbaren Parameter ist es somit möglich, einen vollständigen Pflanzvorgang vorzuprogrammieren, welche ohne weiteres Eingreifen durch eine Bedienperson selbsttätig abfahrbar ist.

Eine alternative Ausführungsform der Erfindung ist in Figur 5 in einer Draufsicht und in Figur 6 in einer Seitenansicht dargestellt. Hierbei ist lediglich ein Ausschnitt der Vorrichtung 1 mit einer Entnahmevorrichtung 4 dargestellt. Nach dieser Ausführung ist wie bereits in Figur 2 beschrieben eine zentrale Antriebswelle 20 für alle Entnahmeeinrichtungen 4 angeordnet, welche vorliegend abgebrochen dargestellt ist. Die Entnahmeeinrichtung 4 beinhaltet wie bereits in Figur 4 beschrieben den Bechergurt 17 mit den Bechern 9, welcher über zwei Gurttrommeln 18 geführt ist.

Erfindungsgemäß ist hierbei die angetriebene Gurttrommel 18" auf einer Hohlwelle 29 angeordnet, welche auf der Antriebswelle 20 des Zentralantriebes 24 gelagert ist. Die Hohlwelle 29 und die Antriebswelle 20 sind wiederum durch ein Wechselgetriebe 30 getrieblich miteinander verbunden, welches wenigstens zwei Übersetzungsstufen umfasst. Nach vorliegender Darstellung ist ein Wechselgetriebe 30 mit zwei Übersetzungsstufen dargestellt, welches auch von der Antriebswelle 20 entkuppelt werden kann, wodurch eine zuverlässige Abschaltung der Entnahmeeinrichtung 4 der betreffenden Spur 16 ermöglicht ist. Ebenso können Wechselgetriebe mit mehreren Übersetzungsstufen oder auch einer zusätzlichen Kupplungseinheit zum Einsatz kommen.

Vorliegend einhaltet das Wechselgetriebe 30 einen schwenkbaren Winkelhebel 31, welcher an seinen Enden jeweils Zahnräder Z4, Z5, Z6 trägt, welche mit entsprechenden Zahnrädern Z1, Z2 der Hohlwelle 29 sowie der Antriebswelle 20 in Eingriff bringbar sind. In der gezeigten Position befindet sich das Wechselgetriebe 30 bzw. der Winkelhebel 31 in einer entkuppelten Position, so dass die Entnahmeeinrichtung 4 der betreffenden Spur abgeschaltet ist. Zum Kuppeln der Hohlwelle 29 mit der Antriebswelle 20 kann wahlweise entweder das Zahnrad Z4 oder die Zahnräder Z5 und Z6 mit den entsprechenden Zahnrädern Z1, Z2, Z3 der Hohlwelle 29 und der Antriebswelle 20 in Eingriff gebracht werden.

Wie aus der Darstellung der Figur 5 ersichtlich, dient aufgrund der gleichen Durchmesser der Zahnräder Z1 und Z2 das Zahnrad Z4 lediglich zum Kuppeln der Antriebswelle 20 mit der Hohlwelle 29, so dass ein Übersetzungsverhältnis von 1:1 vorliegt. Die Entnahmeeinrichtung 4 wird somit mit einem voreingestellten Legeabstand a, welcher wie in Figur 2 beschrieben zentral einstellbar ist, betrieben. Wird hingegen der Winkelhebel 31 verschwenkt, so gerät das Zahnrad Z4 außer Eingriff und die Zahnräder Z5 und Z6 kämmen mit den Zahnrädern Z1 und Z2, wodurch eine höhere Drehzahl der Hohlwelle 29 und somit ein geringerer Pflanzabstand a' der Entnahmeeinrichtung 4 erreicht wird. Die Betätigung des Winkelhebels 31 kann hierbei im einfachsten Fall manuell erfolgen oder, wie hier dargestellt, mittels eines Pneumatik- oder Hydraulikzylinders 32.

Eine Wechselgetriebe 30 mit Hohlwelle 29 kann hierbei an jeder Spur 16 der Vorrichtung 1 angeordnet sein, wobei die Wechselgetriebe 30 dann vorzugsweise einzeln schaltbar bzw. kuppelbar sind. Somit ist jede Entnahmeeinrichtung 4 wahlweise im voreingestellten Pflanzabstand a, einem verringerten Pflanzabstand a' betreibbar oder auch vollständig abschaltbar. Hierbei können auch Wechselgetriebe 30 mit verschiedenen Übersetzungen zum Einsatz kommen, so dass an verschiedenen Spuren 16 verschiedene Pflanzabstände a', a" möglich sind. Je nach Anzahl der Spuren 16 der Vorrichtung 1 kann es jedoch auch ausreichend sein, nur eine oder zwei Entnahmeeinrichtungen 4 mit einem Wechselgetriebe 30 zu versehen. So können beispielsweise bei einer vierspurigen Vorrichtung 1 die beiden mittleren Reihen gemeinsam durch ein Wechselgetriebe 30 ansteuerbar sein, während die beiden äußeren Reihen abschaltbar sind.

Vorzugsweise ist der Zylinder 32, welcher vorliegend das Stellglied 26 zur Ansteuerung des Wechselgetriebes 30 bildet, mit einer Steuereinheit 28 verbunden, so dass auch hier die unter Figur 4 beschriebenen Funktionen realisiert werden können. Mittels des in Figur 5 und 6 beschriebenen Wechselgetriebes 30 mit einem schwenkbaren Winkelhebels 31 kann in konstruktiv einfacher und wenig störanfälliger Weise ein Legemuster mit einem engeren Pflanzabstand a' in den Reihen 22' zwischen den Fahrgassen 21 realisiert werden.

Kombinationen von Einzelantrieben 25 mit einem Zentralantrieb 24 sind ebenfalls möglich und liegen in Rahmen der Erfindung. So kann es insbesondere bei Vorrichtungen 1 mit mehr als vier Spuren 16 sinnvoll sein, nur einen Teil der Entnahmeeinrichtungen 4 mit einem Einzelantrieb 25 zu versehen und die restlichen Entnahmeeinrichtungen mit einem Zentralantrieb 24 anzutreiben, da in diesem Fall die Arbeitsbreite der Dünge- oder Beizvorrichtung 13 häufig nur noch zwei oder drei Arbeitsbreiten der Pflanzvorrichtung 1 umfasst und somit nicht alle Spuren 16 weitreichende Einstellmöglichkeiten aufweisen müssen.

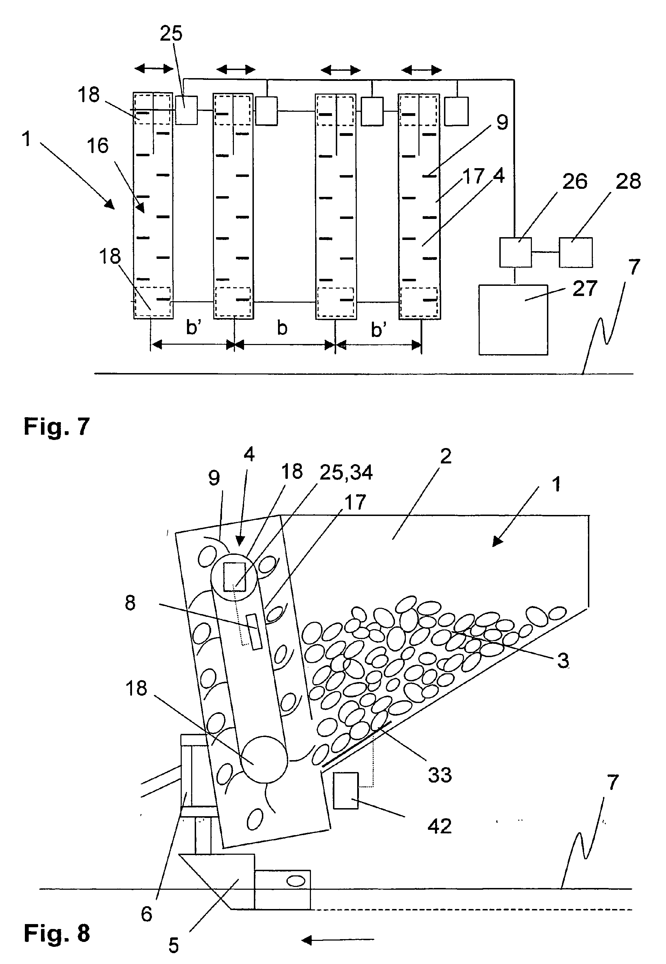

Figur 7 zeigt eine weitere Ausführung der Erfindung, bei welcher die Vorrichtung 1 je Entnahmevorrichtung 4 einen elektrischen Einzelantrieb 25 aufweist. Vorliegend ist wiederum eine Vorrichtung 1 mit vier Spuren 16 und somit mit vier Entnahmeeinrichtungen 4 gezeigt. Wie in Figur 4 bereits beschrieben, sind die vier Elektromotoren bzw. elektrische Einzelantriebe 25 mit einer zentralen Versorgungseinheit 27 verbunden, welche vorliegend durch einen Generator gebildet ist. Dieser kann beispielsweise durch die Zapfwelle eines Schleppers antreibbar sein. Durch einen derartigen Generator kann in günstiger Weise eine Versorgungsspannung an der Vorrichtung 1 für bereitgestellt werden, so dass es hierdurch möglich ist, eine Vielzahl weiterer Aggregate 42, 8 der Vorrichtung 1 elektrisch anzutreiben. Anders als in Figur 4 beschrieben, ist der Generator 27 vorliegend über ein gemeinsames Stellglied 26 mit den Einzelantrieben 25 verbunden, so dass die Einzelantriebe nur gemeinsam durch die Steuereinheit 28 gesteuert werden können. Ebenso können jedoch wie in Fig. 4 gezeigt die Einzelantriebe jeweils mittels eines Stellgliedes 26 individuell gesteuert werden. Die Steuereinheit 28 der Vorrichtung 1 ist vorzugsweise am Schlepper (nicht dargestellt) angeordnet, so dass eine Einstellung der Pflanzabstände a bequem vom Schlepper aus möglich ist.

Sind die Entnahmevorrichtungen 4 jeder Spur 16 mit einem elektrischen Einzelantrieb 25 versehen, so ist es möglich, das gesamte Legeaggregate bzw. die gesamte Entnahmeeinrichtung 4 samt ihrem Antrieb in Breitenrichtung der Maschine zu verschieben, wie durch die Doppelpfeile angedeutet. Da keine mechanische Kopplung zu den anderen Entnahmeeinrichtungen 4 oder anderen Teilen der Vorrichtung vorhanden ist, können somit durch Verschieben der Entnahmeeinrichtungen 4 in beliebiger Weise verschiedene Reihenabstände b zwischen den Pflanzreihen 22 eingestellt werden. Auch eine stufenlose Verstellung des Reihenabstandes b auf verschiedene Werte ist möglich. Hierdurch kann die Anpassung an verschiedene Reihenabstände b einfach erfolgen. Weiterhin kann auch die Bildung zumindest schmälerer Fahrgassen lediglich durch entsprechende Verstellungen des Reihenabstandes erfolgen und hierdurch Beschädigungen der Pflanzen beim späteren Überfahren vermieden werden.

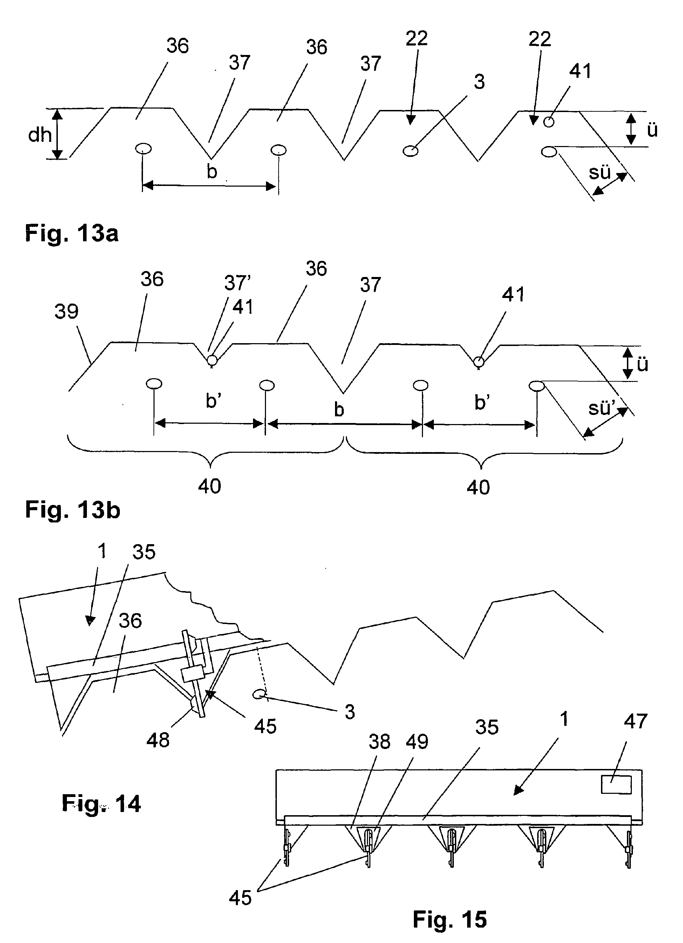

Beispielsweise können bei der gezeigten vierspurigen Vorrichtung 1 die beiden äußeren Pflanzreihen 22 einen engeren Abstand b aufweisen, während zwischen diesen Pflanzreihen ein größerer Abstand b' eingestellt ist. Besonders vorteilhaft ist es hierbei, wenn die Vorrichtung 1 ein Dammformblech zum gleichzeitigen Dammaufbau beinhaltet. Hierdurch ist in günstiger Weise eine Kombination eines Anbaus im Beetverfahren mit einem Anbau im Dammverfahren möglich, wie in Figur 13 gezeigt.

Figur 8 zeigt die Vorrichtung 1 der Figur 7 in einer schematischen Seitenansicht. Die Entnahmeeinrichtung 4 jeder Spur 16 weist einen Bechergurt 17 mit daran angeordneten Bechern 9 auf, welcher jeweils über zwei Gurttrommeln 18 endlos geführt ist. Der elektrische Einzelantrieb 25 jeder Entnahmeeinrichtung 4 kann hierbei wie in Figur 7 gezeigt, neben der Gurttrommel 18 oder auch unterhalb davon angeordnet sein. Ebenso kann der Einzelantrieb 25 jedoch auch in die Gurttrommel 18 integriert sein, so dass ein besonders kompakter Aufbau erzielt wird. Vorliegend ist der Antrieb der Entnahmeeinrichtungen 4 an den oberen Gurttrommeln 18 gezeigt, ein Antrieb an den unteren Gurttrommeln 18 ist jedoch ebenfalls möglich. Vorliegend verfügt der elektrische Einzelantrieb 25 der Entnahmeeinrichtung 4 über eine Rüttelfunktion und bildet somit einen Antrieb 34 für die Rüttelvorrichtung 8. Ein separater Antrieb oder mechanischer Übertrieb für die Rüttelvorrichtung 8 wie im Stand der Technik ist hierdurch nicht erforderlich.

Da durch den Generator als zentrale Versorgungseinheit 27 ohnehin eine Versorgungsspannung an der Vorrichtung 1 verfügbar ist, kann zudem ein weiterer elektrischer Einzelantrieb 35 für einen Schubboden 33 jeder Spur 16 vorgesehen sein. Das Verschieben der Entnahmeeinrichtungen 4 in Breitenrichtung der Vorrichtung 1, um die Reihenabstände b einzustellen, ist somit weiterhin erleichtert. In Weiterentwicklung der Erfindung kann hierbei auch vorgesehen sein, das Verschieben der Entnahmeeinrichtungen 4 durch einen elektrischen Stellmotor zu realisieren. Die Einstellung des Legeabstandes a jeder Spur, der Reihenabstände b sowie die Betätigung weiterer Einrichtungen 4, 8, 33 der Vorrichtung 1 kann über die Steuereinheit 28 vom Schlepper aus erfolgen. Sämtliche Funktionen der Vorrichtung 1 können hierbei über ein Isobussystem gesteuert werden.

Figur 13a zeigt einen Dammaufbau, wie er mittels eines herkömmlichen Dammformbleches 35 erzeugt wird, um Kartoffeln in einem herkömmlichen Dammverfahren anzubauen. Vorliegend ist ein vierreihiger Aufbau gezeigt, welcher in einem Arbeitsgang erzeugt wird. Ebenso sind Vorrichtungen mit Dammformblechen 35 bekannt, welche in einem Arbeitsgang drei Dämme 36 oder eine vorzugsweise gerade Anzahl von Dämmen aufbauen. Vorliegend sind vier Dämme 36 mit jeweils regelmäßig tiefen dazwischenliegenden Furchen 37 dargestellt, wobei die Reihen 22 jeweils einen regelmäßigen Reihenabstand b zueinander aufweisen. Eine exakt mittige Ablage des Pflanzgutes 3 bezogen auf den Damm 36 und gleichmäßige Erdüberdeckung ü, sü ist hierbei von enormer Bedeutung, da bereits geringe Abweichungen zu einem seitlichen Wachsen der Knollennester oder sogar zu einem seitlichen Herauswachsen führen können. Da heute bekannte, leistungsfähige Kartoffelsorten eine tiefe Ablage erfordern, kann jedoch nicht immer eine ausreichende seitliche Überdeckung sü sichergestellt werden. Durch eine größere Dammbreite kann zwar eine günstige seitliche Überdeckung sichergestellt werden, der Ertrag ist jedoch im Vergleich zu schmäleren Dämmen um ca. 10% verringert.

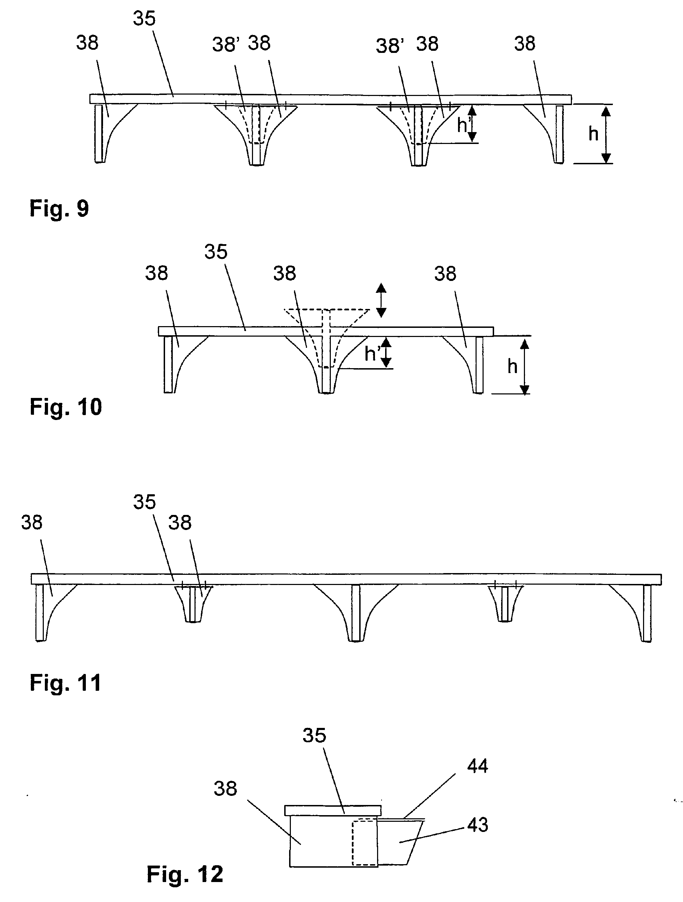

Erfindungsgemäß ist daher ein mit einem Beetverfahren kombinierter Anbau im Dammverfahren vorgesehen, was in günstiger Weise mit einem Dammformblech 35 wie in den Figuren 9 - 11 gezeigt möglich ist.

Figur 13b zeigt einen derartigen mit einem Beet kombinierten Dammaufbau, welcher vorliegend ebenfalls vier Dämme 36 umfasst. Die vier Dämme 36 sind in zwei Doppelreihen 40 ausgebildet, wobei zwischen den Doppelreihen 40 eine Furche 37 mit regelmäßiger Tiefe entsprechend der Dammhöhe dh ausgebildet ist. Zwischen den beiden Pflanzreihen 22 einer Doppelreihe ist hingegen eine Furche 37' mit einer gegenüber der Dammhöhe deutlich verringerten Furche ausgebildet.

Durch die Ausbildung wenigstens einer niedrigeren Furche 37' zwischen zwei Reihen 22 kann eine verbesserte seitliche Überdeckung sü des Pflanzgutes 3 erzielt werden. Besonders vorteilhaft ist es hierbei, wenn der Reihenabstand b' zwischen den beiden Reihen 22 einer Doppelreihe 40 gegenüber dem in Figur 13a gezeigten regelmäßigen Abstand und/oder dem Abstand zwischen den beiden Doppelreihen b verringert ist. Hierdurch kann eine gegenüber einer regelmäßigen Ausbildung deutlich verbesserte seitliche Überdeckung sü erzielt werden. Das seitliche Herauswachsen wird somit verhindert und der Grünanteil des Ertrags vermindert.

Zudem wird durch das im Vergleich zu einem regelmäßigen Dammaufbau erhöhte Erdvolumen das Wasseraufnahmevermögen und Wasserrückhaltevermögen des Dammaufbaus verbessert, was ebenfalls zur Ertragssteigerung beiträgt. Im Gegensatz zu einem reinen Beetverfahren ist das bei der späteren Ernte zu bewegende Erdvolumen dennoch vergleichsweise gering. Ein Befahren des Dammaufbaus ist durch die Furchen 37 bzw. den größeren Abstand b zwischen zwei Doppelreihen 40 im Gegensatz zu einem reinen Beetverfahren dennoch möglich.

Durch den in Figur 13b dargestellten Dammaufbau mit einer Furche 37' mit verringerter Tiefe ist zudem die Tröpfchenbewässerung erleichtert. Im Stand der Technik war es erforderlich, einen Schlauch 41 für die Tröpfchenbewässerung bereits beim Legen des Pflanzgutes 3 in jedem Dammrücken zu verlegen (s. Fig. 13a), da bei einer nachträglichen Verlegung der bereits erzeugte Damm wieder zerstört wird. Bei dem erfindungsgemäßen Dammaufbau (Fig. 13b) kann hingegen die Furche 37' mit geringerer Tiefe als Mulde für den Bewässerungsschlauch 41 genutzt werden. Der Schlauch 41 kann somit nur bei Bedarf auch nachträglich in der Furche 37' verlegt werden. Besonders vorteilhaft ist es hierbei, dass mit nur einem Schlauch 41 zwei Reihen 22 bewässert werden können. Durch die niedrige Ausbildung der Furche 37' kann das Wasser beiden Reihen 22 erreichen und ein zu schneller Abfluss des Wassers wird verhindert.

Vorliegend ist ein vierreihiger Dammaufbau mit zwei Doppelreihen 40 beschrieben. Ebenso kann jedoch auch ein dreireihiger Dammaufbau vorgesehen sein, wobei eine Dreifachreihe mit zwei mittleren Furchen 37' mit verringerter Tiefe ausgebildet ist.

Figur 9 zeigt ein Dammformblech 35 zum Enddammaufbau, welches sowohl an einer Vorrichtung 1 zum Ausbringen von Pflanzgut wie auch an einer separaten Maschine, beispielsweise einer Dammfräse oder einer anderen Vorrichtung zum Enddammaufbau, angeordnet sein kann. Besonders vorteilhaft ist jedoch, wenn das Dammformblech 35 an einer Vorrichtung 1 zum Ausbringen von Pflanzgut angeordnet ist, so dass das Legen und der Dammaufbau in einem Arbeitsgang erfolgen. Sind an der Vorrichtung 1 wie bei Fig. 7 und 8 beschrieben die Pflanzabstände individuell einstellbar, so kann ein Dammaufbau bzw. ein kombiniertes Anbauverfahren wie in Figur 13a beschrieben, in günstiger Weise realisiert werden.

Das Dammformblech 35 ist zum gleichzeitigen Aufbau mehrerer Dämme 36 (vgl. Figur 13), vorliegend drei, mit jeweils dazwischenliegenden Furchen 37 ausgebildet. Das Dammformblech 35 beinhaltet wenigstens zwei äußere Räumelemente 38 mit einer Arbeitshöhe h sowie je nach Reihenzahl ein oder mehrere dazwischenliegende mittlere Räumelemente 38. Vorliegend sind die beiden mittleren Räumelemente 38 austauschbar an dem Dammformblech 35 angeordnet. Diese können somit in einfacher Weise gegen Räumelemente 38' mit einer geringeren Arbeitshöhe h' ausgetauscht werden. Hierdurch ist es möglich, Dämme 36 aufzubauen, zwischen welchen eine Furche 37' mit einer geringeren Tiefe als die der Furchen 37 angeordnet ist. Hierdurch können besonders günstige Wachstumsbedingungen für das Pflanzgut 3 geschaffen werden, wie vorstehend erläutert. Ebenso können jedoch mit dem selben Dammformblech 35 herkömmliche Dämme 36 mit regelmäßig tiefen Furchen 37 aufgebaut werden.

Nach Darstellung der Figur 10 ist zumindest ein mittleres Räumelement 38 nicht austauschbar, sondern höhenverstellbar an dem Dammformblech 35 angeordnet. Auch hierdurch kann eine geringere Arbeitshöhe h' des mittleren Räumelements 38 bzw. eine Furche 37' mit geringerer Tiefe erzeugt werden. Vorliegend ist das Dammformblech 35 zum gleichzeitigen Aufbau von zwei Dämmen 36 mit einer dazwischenliegenden Furche 37' vorgesehen. Nach dem Wenden wird neben der bereits aufgebauten Doppelreihe 40 die nächste Doppelreihe 40 hergestellt, wobei zwischen den beiden Doppelreihen 40 eine Furche 37 mit größere Tiefe durch die äußeren Räumelemente 38 mit der größeren Arbeitshöhe h erzeugt wird.

Figur 11 zeigt weiterhin ein Dammformblech 35, welches zum Aufbau zweier Doppelreihen 40, wie in Figur 13b beschrieben, ausgebildet ist. Das Dammformblech 35 weist hierzu je Doppelreihe 40 zwei äußere feste Räumelemente 38 mit einer Arbeitshöhe h sowie jeweils ein dazwischenliegendes Räumelement 38 mit einer geringeren Arbeitshöhe h' auf.

Neben den hier gezeigten Darstellungen sind eine Vielzahl weiterer Ausführungen denkbar. So können beispielsweise auch bei einem vierreihigen Dammformblech 35, wie in Figur 11 gezeigt, die mittleren drei Räumelemente 38 austauschbar an dem Dammformblech 35 angeordnet sein. Ebenso kann das Dammformblech sechsreihig, achtreihig oder mehrreihig ausgebildet sein. Die Anordnung der austauschbaren oder höhenverstellbaren Räumelemente 38 erfolgt hierbei vorzugsweise derart, dass jeweils Doppelreihen 40 wie in Figur 13 beschrieben erzeugt werden. Es ist jedoch auch möglich, alle mittleren Räumelemente 38 austauschbar bzw. herausnehmbar auszuführen. Hierdurch kann ein Beet für den Anbau im Beetverfahren mit derselben Vorrichtung erzeugt werden. Weiterhin kann das Dammformblech mit einem oder mehreren Sechen versehen sein, wie in Figur 15 gezeigt, um das Dammformblech bei Fahrt am Seitenhang hangaufwärts zu steuern. Vorzugsweise ist hierbei jedem Räumelement 38 mit der normalen Arbeitshöhe h ein Sech zugeordnet.

Figur 12 zeigt eine Weiterbildung der Erfindung, wonach den Räumelementen 38 Flankenformer 43 und/oder Firstbleche 44 zugeordnet sind, mit welchen in an sich bekannter Weise die gewünschte Dammform erzeugt werden kann und die Dammflanken 39 befestigt werden können. Die Flankenformer 43 sind hierbei in ihrer Arbeitshöhe ebenfalls den Räumelementen 38 angepasst, um eine optimale Dammform zu erzielen.

Figur 14 zeigt eine weitere Vorrichtung 1 zum Ausbringen von Pflanzgut, welche ein nachgeordnetes Dammformblech 35 zum Dammformaufbau aufweist und eine günstige Bearbeitung eines Seitenhanges ermöglicht. Erosionsgefährdete Flächen in Hanglagen unterliegen häufig einem Pflugverbot bzw. dürfen nur einer Ausrichtung quer zum Hang bewirtschaftet werden. Bei Bearbeitung eines Seitenhanges kommt es im Stand der Technik jedoch häufig zu einem Abdriften der Vorrichtung, so dass ein Versatz zwischen Ablage des Pflanzguts und Dammaufbau auftritt. Die Pflanzen neigen hierdurch zum seitlichen Herauswachen, was den Ertrag mindert und die Ernte erschwert.

Erfindungsgemäß ist daher an dem Dammformblech 35 ein Sech 45, vorliegend ein Scheibensech, angeordnet, welches bei Fahrt am Seitenhang das Dammformblech 35 hangaufwärts steuert oder drückt, wie durch den Pfeil angedeutet. Vorliegend sind die Vorrichtung 1 sowie das Dammformblech 35 lediglich durch eine abgebrochene Umrisskontur angedeutet. Ein in der Aufhängung des Dammformbleches 35 vorhandenes Spiel kann durch das wenigstens eine Sech 45 eliminiert werden. Hierdurch kann sowohl einem Abdriften des Dammformblechs 35 in Bezug auf die Setzschare 5 entgegen gewirkt werden als auch eine leicht außermittige, nach hangabwärts versetzte Ablage des Pflanzgutes 3 erzielt werden. Durch die leicht hangabwärts gelegene Ablage des Pflanzgutes 3 kann erreicht werden, dass die Pflanzen dennoch in der Mitte des Dammes 36 und nicht seitlich herauswachsen. Hierdurch kann sowohl eine optimale Nährstoffversorgung des Pflanzgutes 3 sowie eine gleichmäßige Erdbedeckung sichergestellt werden. Der Grünanteil des Ertrages kann im Vergleich zum Stand der Technik reduziert werden.

Um die Wasserversorgung weiterhin zu verbessern, kann an dem Sech 45 wenigstens ein seitlich angeordneter Auswerfer 48 angeordnet sein. Dieser Auswerfer 48 wirft bei jeder Umdrehung des Sechs 45 etwas Erde aus und legt hierdurch kleine Wasserreservoirs im Bereich der Dammflanken 39 an. Diese wirken einem zu schnellen Abfluss des Wassers aus der Bewässerung oder von Niederschlägen entgegen. Der Ertrag kann somit weiter gesteigert werden.

Besonders vorteilhaft ist es, wenn die Vorrichtung 1 wie in Figur 15 gezeigt zusätzlich eine GPS-Steuereinheit 47 aufweist. Beinhaltet die GPS-Steuereinheit 47 einen Speicher, in welchem der Verlauf von Höhenlinien hinterlegt ist, so ist es hierdurch möglich, die Vorrichtung 1 entlang geografischer Höhenlinien zu steuern, so dass die Bearbeitung der Flächen stets quer zum Seitenhang erfolgen kann. Das Pflanzgut wird hierbei entlang der Höhenlinien ausgebracht und die Dämme 36 entlang der Höhenlinien senkrecht zum Hang aufgebaut, so dass auch hierdurch einem seitlichen Abdriften der Vorrichtung 1 hangabwärts entgegen gewirkt wird. Insbesondere in Kombination mit einem Sech 45, wie in Figur 14 beschrieben, ist somit mittels der erfindungsgemäßen GPS-Steuerung entlang der Höhenlinien eine optimale Bewirtschaftung von in ungünstigen Hanglagen gelegenen Flächen möglich. Weiterhin ist ersichtlich, dass die Seche 45 vorteilhaft und platzgünstig mittels eines Halters 49 im Inneren der Räumelemente 38 angeordnet werden können. Hierdurch kann jedem Räumelement 38 ein Sech 45 zugeordnet sein, so dass eine gute Wirkung der Seche 45 in beiden Fahrtrichtungen bezogen auf den Seitenhang erzielt werden kann.

Die Erfindung ist nicht auf die dargestellten Ausführungsbeispiele beschränkt. Weitere Abwandlungen im Rahmen der Patentansprüche fallen ebenfalls unter die Erfindung.

## Patentansprüche

1. Vorrichtung (1) zum Ausbringen von Pflanzgut (3), insbesondere Kartoffeln, in einer Reihe (22) hintereinander, wobei die Vorrichtung (1) wenigstens zwei Spuren (16) mit jeweils einer Entnahmeeinrichtung (4) für das Pflanzgut (3) aus einem Vorratsbehälter (2) und einer Setzschar (5) aufweist, um das Pflanzgut (3) gleichzeitig in mehreren Reihen (22) auszubringen, wobei ein gleichmäßiger Pflanzabstand (a) der Spuren (16) voreinstellbar ist, und zur Bildung von Fahrgassen die Entnahmeeinrichtung (4) wenigstens einer Spur (16) der Vorrichtung (1) abschaltbar ist, **dadurch gekennzeichnet, dass** der Pflanzabstand (a) wenigstens einer Spur (16) unabhängig von dem der anderen Spur(en) (16) auf wenigstens einen, von dem der anderen Spuren (16) abweichenden, geringeren Wert (a') einstellbar ist.

2. Vorrichtung nach dem vorhergehenden Anspruche, **dadurch gekennzeichnet, dass** ein Pflanzabstand (a) aller Spuren (16) zentral voreinstellbar ist und der Pflanzabstand (a) wenigstens einer Spur (16) unabhängig von dem voreingestellten Pflanzabstand (a) auf wenigstens einen vom dem voreingestellten Pflanzabstand (a) abweichenden Wert (a') einstellbar ist.

3. Vorrichtung nach einem der vorhergehenden Ansprüche, **dadurch gekennzeichnet, dass** der Pflanzabstand (a) wenigstens einer Spur (16) unabhängig von dem voreingestellten Pflanzabstand (a) auf genau zwei verschiedene, von dem voreingestellten Pflanzabstand (a) abweichende Werte (a', a") einstellbar ist.

4. Vorrichtung nach einem der vorhergehenden Ansprüche, **dadurch gekennzeichnet, dass** die Vorrichtung (1) eine Steuereinheit (28) umfasst, mittels welcher die Entnahmeeinrichtung (4) einzelner Spuren (16) abschaltbar und/oder der Pflanzabstand (a, a', a") einzelner Spuren (16) einstellbar ist.

5. Vorrichtung nach einem der vorhergehenden Ansprüche, **dadurch gekennzeichnet, dass** die Vorrichtung (1) weiterhin eine Dünge- und/oder Beizvorrichtung (13) umfasst, wobei die Düngemittelzufuhr und/oder Beizezufuhr wenigstens einer Spur (16) abweichend von der der anderen Spuren (16) einstellbar ist und/oder abschaltbar ist.

6. Vorrichtung nach einem der vorhergehenden Ansprüche, **dadurch gekennzeichnet, dass** während des Pflanzvorganges mittels der Steuereinheit (28) der Pflanzabstand (a, a', a") einzelner Spuren (16) wechselnd entsprechend vorgebbarer Parameter einstellbar und/oder einzelne Spuren (16) wechselnd abschaltbar sind und/oder die Düngemittelzufuhr und/oder Beizezufuhr entsprechend vorgebbarer Parameter einstellbar und/oder abschaltbar ist.

7. Vorrichtung nach Anspruch 7, **dadurch gekennzeichnet, dass** die Parameter wenigstens die Anzahl der Spuren (16) der Vorrichtung (1) und eine Arbeitsbreite einer nachfolgenden Dünge- oder Beizvorrichtung (13) umfassen.

8. Vorrichtung nach einem der vorhergehenden Ansprüche, **dadurch gekennzeichnet, dass** die Steuereinheit (28) ein Zählwerk beinhaltet, mittels welchem ein vollständiger, vorprogrammierbarer Pflanzvorgang selbsttätig abfahrbar ist.

9. Vorrichtung nach einem der vorhergehenden Ansprüche, **dadurch gekennzeichnet, dass** die Vorrichtung (1) je Entnahmeeinrichtung (4) einen vorzugsweise elektrischen Einzelantrieb (25) aufweist, welcher durch die Steuereinheit (28) ansteuerbar ist, um den Pflanzabstand (a, a', a") einzustellen und/oder die Entnahmeeinrichtung (4) abzuschalten.

10. Vorrichtung nach einem der vorhergehenden Ansprüche, **dadurch gekennzeichnet, dass** je Spur (16) der Vorrichtung (1) ein weiterer elektrischer Einzelantrieb (42) zum Antrieb eines Schubbodens (33) der Spur (16) vorgesehen ist.

11. Vorrichtung nach einem der vorhergehenden Ansprüche, **dadurch gekennzeichnet, dass** die Entnahmeeinrichtungen (4) in Breitenrichtung der Vorrichtung (1) verstellbar, vorzugsweise einzeln verstellbar, an der Vorrichtung (1) angeordnet sind und hierdurch ein Reihenabstand (b) vorzugsweise stufenlos einstellbar ist.

12. Vorrichtung nach einem der vorhergehenden Ansprüche, **dadurch gekennzeichnet, dass** die Vorrichtung (1) als zentrale Versorgungseinheit (27) einen Generator beinhaltet, welcher durch eine Zapfwelle eines Schleppers antreibbar ist.

13. Vorrichtung nach einem der vorhergehenden Ansprüche, **dadurch gekennzeichnet, dass** die Einzelantriebe (25) über eine Rüttelfunktion verfügen.

14. Vorrichtung nach einem der vorhergehenden Ansprüche, **dadurch gekennzeichnet, dass** die Entnahmeeinrichtung (4) wenigstens einer Spur (16) durch ein Wechselgetriebe (30) mit einem Zentralantrieb (24) der Entnahmeeinrichtungen (4) verbunden ist.

15. Vorrichtung nach einem der vorhergehenden Ansprüche, **dadurch gekennzeichnet, dass** das Wechselgetriebe (30) kuppelbar mit dem Zentralantrieb (24) verbunden ist.

16. Vorrichtung nach einem der vorhergehenden Ansprüche, **dadurch gekennzeichnet, dass** die Entnahmeeinrichtung (4) wenigstens einer Spur (16) durch eine Hohlwelle (29) angetrieben ist, welche auf einer Antriebswelle (20) des Zentralantriebs (24) gelagert ist und durch das Wechselgetriebe (30) mit dieser verbunden ist.

17. Vorrichtung nach einem der vorhergehenden Ansprüche, **dadurch gekennzeichnet, dass** das Wechselgetriebe (30) einen schwenkbaren Winkelhebel (31) umfasst, an dessen Enden jeweils Zahnräder (Z) zum Kuppeln der Hohlwelle (29) mit der Antriebswelle (20) angeordnet sind.

18. Vorrichtung nach einem der vorhergehenden Ansprüche, **dadurch gekennzeichnet, dass** die Vorrichtung (1) ein nachgeordnetes Dammformblech (35) zum Enddammaufbau aufweist und an dem Dammformblech (35) wenigstens ein Sech (45), vorzugsweise ein Scheibensech, angeordnet ist, welches bei Fahrt am Seitenhang das Dammformblech (35) hangaufwärts steuert.

19. Vorrichtung nach einem der vorhergehenden Ansprüche, **dadurch gekennzeichnet, dass** das Sech (45) im Bereich eines Räumelements (38) des Dammformblechs (35) angeordnet ist.

20. Vorrichtung nach einem der vorhergehenden Ansprüche, **dadurch gekennzeichnet, dass** das Sech (45) wenigstens einen seitlich angeordneten Auswerfer (48) aufweist.

21. Vorrichtung nach einem der vorhergehenden Ansprüche, **dadurch gekennzeichnet, dass** die Vorrichtung (1) eine GPS-Steuereinheit (47) aufweist, wobei die GPS-Steuereinheit (47) einen Speicher beinhaltet, in welchem der Verlauf geographischer Höhenlinien hinterlegbar ist.

22. Vorrichtung nach einem der vorhergehenden Ansprüche **dadurch gekennzeichnet, dass** die Vorrichtung (1) ein Dammformblech (35) zum gleichzeitigen Aufbau wenigstens zweier Dämme (36) mit jeweils dazwischen liegenden Furchen (37) aufweist, wobei das Dammformblech (35) wenigstens zwei äußere und wenigstens ein mittleres Räumelement (38) aufweist, und wobei das wenigstens eine mittlere Räumelement (38) austauschbar und/oder höhenverstellbar an dem Dammformblech (35) angeordnet ist.

23. Vorrichtung nach dem vorhergehenden Anspruch, **dadurch gekennzeichnet, dass** das wenigstens eine mittlere Räumelement (38') eine wesentlich geringere Arbeitshöhe (h') aufweist als die äußeren Räumelemente (38).

24. Vorrichtung nach Anspruch 23 oder 24, **dadurch gekennzeichnet, dass** den Räumelementen (38) Flankenformer (43) in einer den Räumelementen (38) angepassten Arbeitshöhe (h) zugeordnet sind.

25. Verfahren zum Ausbringen von Pflanzgut (3), insbesondere Kartoffeln, bei welchem das Pflanzgut mit einem gleichmäßigen Pflanzabstand (a) in einer Reihe (22) hintereinander abgelegt wird, wobei das Pflanzgut (3) in einer Vielzahl nebeneinander angeordneter Reihen (22) unter Bildung von Fahrgassen (21) ausgebracht wird, **dadurch gekennzeichnet**, das Pflanzgut (3) in den zwischen den Fahrgassen (21) angeordneten Reihen (22') und in den außen direkt neben den Fahrgassen (21) liegenden Reihen (22") mit einem geringeren Pflanzabstand (a') als dem Pflanzabstand (a) der anderen Reihen (22) abgelegt wird.

26. Verfahren nach dem vorhergehenden Anspruch, **dadurch gekennzeichnet, dass** das Pflanzgut (3) in den außen direkt neben den Fahrgassen (21) liegenden Reihen (22") mit einem größeren Pflanzabstand (a") als in den Reihen (22') zwischen den Fahrgassen (21) ausgebracht wird.

27. Verfahren nach einem der vorhergehenden Ansprüche, **dadurch gekennzeichnet, dass** während und/oder nach dem Ausbringen des Pflanzgutes (3) ein Dünge- oder Beizmittel ausgebracht wird, wobei in den Reihen (22', 22") mit einem geringeren Pflanzabstand (a', a") als dem Pflanzabstand (a) der anderen Reihen (22) weniger Dünge- oder Beizmittel als in den anderen Reihen (22) oder kein Dünge- oder Beizmittel ausgebracht wird.

28. Verfahren nach einem der vorhergehenden Ansprüche, **dadurch gekennzeichnet, dass** während des Pflanzvorganges mit einer Vorrichtung (1) zum Ausbringen von Pflanzgut (3) die Einstellung des Pflanzabstandes (a, a', a") einer Reihe (22) und/oder eine Düngemittelzufuhr und/oder Beizezufuhr einer Reihe (22) entsprechend vorgebbarer Parameter durch eine Steuereinheit (28) selbsttätig durchgeführt wird.

29. Verfahren nach einem der vorhergehenden Ansprüche, **dadurch gekennzeichnet, dass** die Zu- und Abschaltung einzelner Spuren (16) der Vorrichtung (1) und/oder die Einstellung des Pflanzabstandes (a, a', a") entsprechend der Anzahl der Spuren (16) der Vorrichtung (1) und einer Arbeitsbreite einer nachfolgenden Dünge- oder Beizvorrichtung (13) durchgeführt wird.

30. Verfahren nach einem der vorhergehenden Ansprüche **dadurch gekennzeichnet, dass** mittels einer Vorrichtung (1) gleichzeitig mit dem Ausbringen des Pflanzguts ein Enddamm (36) aufgebaut wird und dass in Hanglagen die Vorrichtung (1) mittels einer GPS-Steuereinheit (48) entlang geographischer Höhenlinien gesteuert wird und das Pflanzgut (3) entlang geographischer Höhenlinien quer zum Hang ausgebracht wird.

## Claims

1. A device (1) for sowing seed stock (3), particularly potatoes, in a row (22) one after the other, wherein the device (1) comprises at least two tracks (16) each having a discharge unit (4) for the seed stock (3) from a storage hopper (2) and a sowing blade (5) for sowing the seed stock (3) in a plurality of rows (22) at the same time, a uniform plant spacing (a) of the tracks (16) being able to be preset, and the discharge unit (4) of at least one track (16) of the device (1) being able to be switched off for forming access lanes, **characterized in that** the plant spacing (a) of at least one track (16) can be set independently of that of the other track(s) (16) to at least one lesser value (a') different from that of the other track(s) (16).

2. The device according to the preceding claim, **characterized in that** a plant spacing (a) of all tracks (16) can be preset centrally, and the plant spacing (a) of at least one track (16) can be set independently of the preset plant spacing (a) to at least one value (a') deviating from the preset plant spacing (a).

3. The device according to one of the preceding claims, **characterized in that** the plant spacing (a) of at least one track (16) can be set independently of the preset plant spacing (a) to exactly two different values (a', a") deviating from the preset plant spacing (a).

4. The device according to one of the preceding claims, **characterized in that** the device (1) comprises a control unit (28) by means of which the discharge unit (4) of individual tracks (16) can be switched off and/or the plant spacing (a, a', a") of individual tracks (16) can be set.

5. The device according to one of the preceding claims, **characterized in that** the device (1) further comprises a fertilizing and/or disinfectant device (13), wherein the fertilizer feed and/or disinfectant feed of at least one track (16) can be adjusted and/or switched off independently of that of the other tracks (16).

6. The device according to one of the preceding claims, **characterized in that** during the planting procedure the plant spacing (a, a', a") of individual tracks (16) can be alternately set using the control unit (28) according to settable parameters and/or individual tracks (16) can be alternately switched off and/or the fertilizer feed and/or disinfectant feed can be set and/or switched off according to settable parameters.

7. The device according to claim 7, **characterized in that** the parameters comprise at least the number of tracks (16) of the device (1) and a working width of a following fertilizer or disinfectant device (13).

8. The device according to one of the preceding claims, **characterized in that** the control unit (28) comprises a counter by means of which a complete pre-programmable planting procedure can be run autonomously.

9. The device according to one of the preceding claims, **characterized in that** the device (1) comprises a preferably electrical individual drive (25) for each discharge unit (4) that can be actuated by the control unit (28) in order to set the plant spacing (a, a', a") and/or to switch off the discharge unit (4).

10. The device according to one of the preceding claims, **characterized in that** a further electrical individual drive (42) is provided for each track (16) of the device (1) for driving a push floor (33) of the track (16).

11. The device according to one of the preceding claims, **characterized in that** the discharge units (4) are disposed on the device (1) such that said units can be adjusted in the width direction of the device (1), preferably individually adjusted, and that a row spacing (b) can thereby be set preferably infinitely variably.

12. The device according to one of the preceding claims, **characterized in that** the device (1) comprises a generator as a central supply unit (27) that can be driven by a power take-off of a tractor.

13. The device according to one of the preceding claims, **characterized in that** the individual drives (25) have a shaking function.

14. The device according to one of the preceding claims, **characterized in that** the discharge unit (4) of at least one track (16) is connected to a central drive (24) of the discharge units (4) by a change speed gearbox (30).

15. The device according to one of the preceding claims, **characterized in that** the change speed gearbox (30) is connected to the central drive (24) such that it can be engaged.

16. The device according to one of the preceding claims, **characterized in that** the discharge unit (4) of at least one track (16) is driven by a hollow shaft (29) supported on a drive shaft (20) of the central drive (24) and is connected to the same by the change speed gearbox (30).

17. The device according to one of the preceding claims, **characterized in that** the change speed gearbox (30) comprises a pivoting angle lever (31) having gears (Z) disposed at each of its ends for coupling the hollow shaft (29) to the drive shaft (20).

18. The device according to one of the preceding claims, **characterized in that** the device (1) comprises a downstream dam forming sheet (35) for constructing an end dam, and at least one coulter (45), preferably a disc coulter, is disposed on the dam forming sheet (35), steering the dam forming (35) sheet uphill when traversing a lateral slope.

19. The device according to one of the preceding claims, **characterized in that** the coulter (45) is disposed in the region of a clearing element (38) of the dam forming sheet (35).

20. The device according to one of the preceding claims, **characterized in that** the coulter (45) comprises at least one ejector (48) disposed on the side.

21. The device according to one of the preceding claims, **characterized in that** the device (1) comprises a GPS control unit (47), wherein the GPS control unit (47) comprises a memory in which the progression of geographical contour lines can be stored.

22. The device according to one of the preceding claims, **characterized in that** the device (1) comprises a dam forming sheet (35) for simultaneously constructing at least two dams (36) having channels (37) lying between the dams, wherein the dam forming sheet (35) comprises at least two outer and at least one center clearing element (38), and wherein the at least one center clearing element (38) is disposed interchangeably and/or height-adjustably on the dam forming sheet (35).

23. The device according to the preceding claim, **characterized in that** the at least one center clearing element (38') comprises a substantially lower working height (h') than the outer clearing elements (38).

24. The device according to claim 23 or 24, **characterized in that** the clearing elements (38) are associated with flank formers (43) at a working height (h) adapted to the clearing elements (38).

25. A method for sowing seed stock (3), particularly potatoes, wherein the seed stock is placed one after the other in a row (22) at a uniform plant spacing (a) in one row, wherein the seed stock (3) is sown in a plurality of rows (22) disposed adjacent to each other, forming access lanes (21), **characterized in that** the seed stock (3) is sown in the rows (22') disposed between the access lanes (21) and in the outer rows (22") directly adjacent to the access lanes (21), at a lesser plant spacing (a') than the plant spacing (a) of the other rows (22).

26. The method according to the preceding claim, **characterized in that** the seed stock (3) is sown in the outer rows (22") located directly adjacent to the access lanes (21) at a greater plant spacing (a") than in the rows (22*) between the access lanes (21).

27. The method according to one of the preceding claims, **characterized in that** a fertilizer or disinfectant agent is applied during and/or after sowing the seed stock (3), wherein, in the rows (22', 22") having a lesser plant spacing (a', a") than the plant spacing (a) of the other rows (22), less fertilizer or disinfectant agent is applied than in the other rows (22), or no fertilizer or disinfectant agent is applied.

28. The method according to one of the preceding claims, **characterized in that** the setting of the plant spacing (a, a', a") of a row (22), and/or a fertilizer feed and/or a disinfectant feed of a row (22), is autonomously performed by a control unit (28) according to preset parameters, during the sowing procedure, using a device (1) for sowing seed stock (3).

29. The method according to one of the preceding claims, **characterized in that** switching on and off individual tracks (16) of the device (1) and/or the setting of plant spacing (a, a', a") are performed according to the number of tracks (16) of the device (1), and according to a working width of a following fertilizer or disinfectant device (13).

30. The method according to one of the preceding claims, **characterized in that** an end dam (36) is constructed by means of a fixture (1) simultaneously with the sowing of the seed stock, and that the device (1) is steered along geographic contour lines in sloped areas by means of a GPS control unit (48), and the seed stock (3) is sown along geographic contour lines, transverse to the slope.

## Revendications

1. Dispositif (1) pour l'épandage de plants (3) les uns derrière les autres, particulièrement des pommes de terre, en une rangée (22), sachant que le dispositif (1) comporte au moins deux pistes (16) avec respectivement un dispositif de prélèvement (4) pour les plants (3) à partir d'un réservoir (2) et avec un soc planteur (5) afin de d'épandre les plants (3) régulièrement en plusieurs rangées (22), sachant qu'une distance constante (a) est préréglable entre les plants des pistes (16), et que pour la formation d'allées de circulation, le dispositif de prélèvement (4) d'au moins une piste (16) du dispositif (1) peut être arrêté, **caractérisé en ce que** la distance entre plants (a) d'au moins une piste (16) peut être réglée à au moins une valeur (a') plus faible, différente de celle des autres pistes (16) et indépendamment de celles de l'autre/des autres piste(s) (16).

2. Dispositif selon la revendication précédente, **caractérisé en ce qu'**une distance entre plants (a) de toutes les pistes (16) est centralement préréglable et la distance entre plants (a) d'au moins une piste (16) peut être réglée à une au moins valeur (a') différente de la distance entre plants préréglée (a), indépendamment de la distance entre plants préréglée (a).

3. Dispositif selon l'une quelconque des revendications précédentes, **caractérisé en ce que** la distance entre plants (a) d'au moins une piste (16) peut être réglée à exactement deux valeurs différentes (a', a") différentes de la distance entre plants préréglée (a)

4. Dispositif selon l'une quelconque des revendications précédentes, **caractérisé en ce que** le dispositif (1) comporte une unité de commande (28) par laquelle le dispositif de prélèvement (4) de pistes (16) individuelles peut être arrêté et/ou la distance entre plants (a, a', a") de pistes (16) individuelles peut être réglée.

5. Dispositif selon l'une quelconque des revendications précédentes, **caractérisé en ce que** le dispositif (1) comporte en outre un dispositif d'épandage d'engrais et/ou de décapage (13), sachant que l'amenée d'engrais et/ou de décapant d'au moins une piste (16) peut être réglée différemment de celle des autres pistes (16) et/ou arrêtée.

6. Dispositif selon l'une quelconque des revendications précédentes, **caractérisé en ce que** durant la procédure de plantation, au moyen de l'unité de commande (28), la distance entre plants (a, a', a") de pistes individuelles (16) peut être réglée en alternance sur la base de paramètres prédéfinissables et/ou des pistes individuelles (16) peuvent être arrêtées en alternance et/ou l'amenée d'engrais et/ou de décapant peut être réglée et/ou arrêtée sur la base de paramètres prédéfinissables.

7. Dispositif selon la revendication 7, **caractérisé en ce que** les paramètres comprennent au moins le nombre de pistes (16) du dispositif (1) et une largeur de travail d'un dispositif d'épandage d'engrais ou de décapage (13) disposé en aval.

8. Dispositif selon l'une quelconque des revendications précédentes, **caractérisé en ce que** l'unité de commande (28) comporte un dispositif de comptage, par lequel il est possible d'exécuter automatiquement une procédure de plantation intégrale préprogrammable.

9. Dispositif selon l'une quelconque des revendications précédentes, **caractérisé en ce que** le dispositif (1) comporte pour chaque dispositif de prélèvement (4) un entraînement individuel (25), de préférence électrique, qui peut être commandé par l'unité de commande (28) afin de régler la distance entre plants (a, a', a") et/ou d'arrêter le dispositif de prélèvement (4).

10. Dispositif selon l'une quelconque des revendications précédentes, **caractérisé en ce que** pour chaque piste (16) du dispositif (1), un second entraînement individuel électrique (42) est prévu pour entraîner un fond mouvant (33) de la piste (16).

11. Dispositif selon l'une quelconque des revendications précédentes, **caractérisé en ce que** les dispositifs de prélèvement (4) sont disposés au dispositif (1) dans le sens de la largeur du dispositif (1), d'une manière réglable, de préférence individuellement réglable, et, ainsi, la distance entre rangées (b) est réglable, de préférence en continu.

12. Dispositif selon l'une quelconque des revendications précédentes, **caractérisé en ce que** le dispositif (1) comporte comme unité d'alimentation centrale (27) un générateur, qui peut être commandé via un arbre de prise de force d'un tracteur

13. Dispositif selon l'une quelconque des revendications précédentes, **caractérisé en ce que** les entraînements individuels (25) intègrent une fonctionnalité génération de secousses.

14. Dispositif selon l'une quelconque des revendications précédentes, **caractérisé en ce que** le dispositif de prélèvement (4) d'au moins une piste (16) est relié via une transmission à variation (30) à un entraînement central (24) des dispositifs de prélèvement (4).

15. Dispositif selon l'une quelconque des revendications précédentes, **caractérisé en ce que** la transmission à variation (30) est reliée de manière couplable avec l'entraînement central (24).

16. Dispositif selon l'une quelconque des revendications précédentes, **caractérisé en ce que** le dispositif de prélèvement (4) d'au moins une piste (16) est entraîné par un arbre creux (29), qui est logé sur un arbre d'entraînement (20) de l'entraînement central (24), avec lequel il est relié via la transmission à variation (30).

17. Dispositif selon l'une quelconque des revendications précédentes, **caractérisé en ce que** la transmission à variation (30) comporte un levier coudé pivotant (31), dont les extrémités comportent respectivement des roues dentées (Z) pour le couplage de l'arbre creux (29) avec l'arbre d'entraînement (20).

18. Dispositif selon l'une quelconque des revendications précédentes, **caractérisé en ce que** le dispositif (1) comporte une tôle de buttage (35) disposée en aval pour la constitution de la butte d'extrémité et au moins un coutre (45), de préférence un coutre à disque, est disposé à la tôle de buttage (35), qui commande la tôle de buttage (35) lors de la circulation sur face latérale.

19. Dispositif selon l'une quelconque des revendications précédentes, **caractérisé en ce que** le coutre (45) est disposé dans une zone d'un élément de dégagement (38) de la tôle de buttage (35).

20. Dispositif selon l'une quelconque des revendications précédentes, **caractérisé en ce que** le coutre (45) comporte au moins un éjecteur (48) disposé latéralement.

21. Dispositif selon l'une quelconque des revendications précédentes, **caractérisé en ce que** le dispositif (1) comporte une unité de commande à système de positionnement global par satellite (GPS) (47), sachant que l'unité de commande à système de positionnement global par satellite (GPS) (47) comporte une mémoire dans laquelle peut être enregistrée l'allure des courbes de niveau géographiques.

22. Dispositif selon l'une quelconque des revendications précédentes, **caractérisé en ce que** le dispositif (1) comporte une tôle de buttage (35) pour la constitution simultanée d'au moins deux buttes (36) avec des sillons (37) disposés respectivement entre les buttes, sachant que la tôle de buttage (35) comporte au moins deux éléments de dégagement extérieurs et au moins un élément de dégagement central (38), et sachant que l'au moins un élément de dégagement central (38) est disposé de manière remplaçable et/ou réglable en hauteur à la tôle de buttage (35).

23. Dispositif selon la revendication précédente, **caractérisé en ce que** l'au moins un élément de dégagement central (38') présente une hauteur de travail (h') substantiellement inférieure à celle des éléments de dégagement extérieurs (38).

24. Dispositif selon la revendication 23 ou 24, **caractérisé en ce que** des mouleurs de flancs (43) sont attribués aux éléments de dégagement (38) à une hauteur de travail (h) adaptée aux éléments de dégagement (38).

25. Procédé pour l'épandage de plants (3), particulièrement des pommes de terre, dans lequel les plants sont déposés les uns derrières les autres à une distance égale (a) les uns des autres et en une rangée (22), sachant que les plants (3) sont épandus en un grand nombre de rangées (22) disposées les unes à côté des autres et formant entre elles des pistes de circulation (21), **caractérisé en ce que** les plants (3), dans les rangées (22') disposées entre les pistes de circulation (21) et dans les rangées (22") disposées en marge, immédiatement à côté des pistes de circulation (21), sont déposés à une distance entre plants (a') inférieure à la distance entre plants (a) des autres rangées (22).

26. Procédé selon la revendication précédente, **caractérisé en ce que** les plants (3), dans les rangées (22") disposées en marge, immédiatement à côté des pistes de circulation (21), sont épandus à une distance entre plants (a") supérieure à celle des rangées (22') disposées entre les pistes de circulation (21).

27. Procédé selon l'une quelconque des revendications précédentes, **caractérisé en ce que** durant et/ou après l'épandage des plants (3), un engrais ou un décapant est épandu, sachant que dans les rangées (22', 22") avec une distance entre plants (a', a") inférieure à la distance entre plants (a) des autres rangées (22), la quantité d'engrais ou de décapant est inférieure à celle des autres rangées (22) ou aucun engrais ou décapant n'est épandu.

28. Procédé selon l'une quelconque des revendications précédentes, **caractérisé en ce que** durant la procédure de plantation au moyen d'un dispositif (1) pour l'épandage de plants (3), le réglage de la distance entre plants (a, a', a") d'une rangée (22) et/ou une amenée d'engrais et/ou une amenée de décapant d'une rangée (22) est effectué(e) automatiquement via une unité de commande (28) sur la base de paramètres prédéfinissables.

29. Procédé selon l'une quelconque des revendications précédentes, **caractérisé en ce que** l'activation et la désactivation de pistes individuelles (16) du dispositif (1) et/ou le réglage de la distance entre plants (a, a', a") est effectue en fonction du nombre de pistes (16) du dispositif (1) et d'une largeur de travail d'un dispositif d'épandage d'engrais ou de décapage (13) disposé en aval.

30. Procédé selon l'une quelconque des revendications précédentes, **caractérisé en ce qu'**une butte d'extrémité (36) est constituée au moyen d'un dispositif (1) simultanément à l'épandage des plants et que, dans les situations en pente, le dispositif (1) est commandé le long de courbes de niveau géographiques au moyen d'une unité de commande à système de positionnement global par satellite (GPS) (48) et les plants (3) sont épandus perpendiculairement à la pente le long de courbes de niveau géographiques.
